# EUROPEAN PATENT SPECIFICATION

(11) **EP 3 509 367 B1**
(45) Date of publication and mention of the grant of the patent: **06.04.2022**
(21) Application number: 16917425.7
(22) Date of filing: 30.09.2016
(51) Int. Cl.: H04W 68/02, H04W 60/04, H04W 84/02, H04W 48/12

(54) **LOCATION MANAGEMENT METHOD, SYSTEM AND USER EQUIPMENT**
STANDORTVERWALTUNGSVERFAHREN, SYSTEM UND BENUTZERGERÄT
PROCÉDÉ DE GESTION D'EMPLACEMENT, SYSTÉME ET ÉQUIPEMENT UTILISATEUR

(43) Date of publication of application: 10.07.2019
(73) Proprietor: Huawei Technologies Co., Ltd., Longgang District Shenzhen, Guangdong 518129 (CN)
(72) Inventor: XIONG, Chunshan, Shenzhen Guangdong 518129 (CN); WU, Yizhuang, Shenzhen Guangdong 518129 (CN)
(74) Representative: Epping - Hermann - Fischer
(86) International application number: PCT/CN2016/101379
(87) International publication number: WO 2018/058675

(56) References cited:
- EP-A1- 1 819 188
- CN-A- 101 047 972
- CN-A- 101 052 204
- CN-A- 101 170 816
- CN-A- 101 350 935
- CN-A- 103 781 174
- US-A- 5 832 381
- LUCENT TECHNOLOGIES ET AL: "Hierarchical tracking Areas in the evolved system", 3GPP DRAFT; S2-062062, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. Lisbon; 20060620, 20 June 2006 (2006-06-20), XP050256157, [retrieved on 2006-06-20]
- MITSUBISHI ELECTRIC: "Hierarchical Tracking Area", 3GPP DRAFT; R3-060153, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG3, no. Denver, USA; 20060208, 8 February 2006 (2006-02-08), XP050159114, [retrieved on 2006-02-08]

## Description

### TECHNICAL FIELD

Embodiments of the present invention relate to communications technologies, and in particular, to a location management method, a control plane node, and user equipment.

### BACKGROUND

To manage a location of user equipment (User Equipment, UE), a tracking area (Tracking Area, TA) is introduced to a Long Term Evolution (Long Term Evolution, LTE) system. A TA is identified by using a tracking area identity (Tracking Area Identity, TAI). The LTE system allocates one TAI list (List) to each UE, and sends the TAI list to the UE for storage. Generally, one TA includes one or more cells, one cell can belong to only one TA, and one TAI list includes one to 16 TAIs. The LTE system manages the location of the UE based on the TAI list, for example, performs location update management and paging management. The location update management may include periodic location update management and aperiodic location update management.

Specifically, in a location update management process, when the UE moves within a TA included in the TAI list allocated to the UE, the TAI list does not need to be updated, to be specific, the aperiodic location update management does not need to be performed. When the UE enters a TA included in a TAI list that is not allocated to the UE, the TAI list is updated, to be specific, the aperiodic location update management is performed. When the aperiodic location update management is performed, the LTE system reallocates one TAI list to the UE. In a paging management process, the LTE system sends a paging message to the UE in all cells included in the TAI list.

In the foregoing location management process based on the TAI list, signaling overheads for the paging management are inversely proportional to signaling overheads for the location update management. Specifically, when the TAI list is excessively large, the TAI list includes excessive cells, and paging load increases accordingly, leading to higher signaling overheads for the paging management, and causing problems such as a paging delay and prolonging of end-to-end connection duration, but a location update is performed less frequently, leading to lower signaling overheads for the location update management; or when the TAI list is excessively small, the TAI list includes a smaller quantity of cells, leading to lower signaling overheads for the paging management, but a location update is performed more frequently, leading to higher signaling overheads for the location update management. Therefore, how to balance the signaling overheads for the paging management and signaling overheads for the update management in the location management process is actually a problem needing to be urgently resolved in the industry.

US 5 832 381 A relates to a cellular radio network organized at least in part into a plurality of cells each belonging to a respective cell layer, comprising: for each said cell a respective base station which broadcasts one or more location area identifiers or identifiers adapted to be used as such; mobile subscriber equipment capable of moving so that the location data of the mobile subscriber equipment is stored with an accuracy of a location area consisting of one or more cells, of a cell layer, in the cellular radio network; at least part of the cellular radio network being organized into at least two hierarchically arranged location area levels, with location areas, for each cell layer, the sizes of location areas being different at different ones of said location area levels; each base station being arranged to broadcast identifiers of the respective location areas of all the respective location area levels in said cell layer which the respective cell belongs to and the respective base station serves.

EP 1 819 188 A1 relates to a method of a Mobile Station (MS) for setting a tracking area in a wireless communication system, comprising: estimating the velocity of the MS; comparing the estimated velocity of the MS with at least one velocity threshold of the MS; and updating the level of a current tracking area according to the comparison.

Document LUCENT TECHNOLOGIES ET AL: "Hierarchical tracking Areas in the evolved system", 3GPP DRAFT; S2-062062, 20 June 2006 proposes that in the evolved system the concept of hierarchical tracking areas be adpoted to help handling the location update signalling load and the paging load.

### SUMMARY

The invention is set out in the appended set of claims.

In the following, parts of the description and drawings referring to embodiments which are not covered by the claims are not presented as embodiments of the invention, but as examples useful for understanding the invention. Embodiments of the present invention provide a location management method, and user equipment, to balance signaling overheads for paging management and information overheads for update management in a location management process.

According to a first aspect, an example useful for understanding the invention provides a location management method. The method is described from a perspective of a first control plane node, and the method includes: the first control plane node determines first location area management information of UE, where the first location area management information includes N levels of location area identity lists, and a periodic time value PTV and a reachable time value RTV that correspond to each level of location area identity list in the N levels of location area identity lists; and performs paging management based on the first location area management information.

In the foregoing method, the first control plane node determines a paging area in areas to which the N levels of location area identity lists belong, and performs the paging management only in the paging area, instead of performing the paging management in all the areas corresponding to the N levels of location area identity lists. The paging management is performed in a small range, so that signaling overheads for the paging management can be reduced, to balance the signaling overheads for the paging management and signaling overheads for location update management in a location management process.

In a feasible implementation, the N levels of location area identity lists include at least one Nth-level location area identity list and at least one (n+1)th-level location area identity list; an area to which any one of the at least one (n+1)th-level location area identity list belongs is properly included in one or more of the at least one Nth-level location area identity list; and a periodic time value PTVn corresponding to the Nth-level location area identity list is less than a periodic time value PTV(n+1) corresponding to the (n+1)th-level location area identity list, and a reachable time value RTVn corresponding to the Nth-level location area identity list is equal to (PTVn)+t, where t>0, 1≤n≤(N-1), and n is an integer.

In the foregoing method, layered design of the first location area management information is implemented.

In a feasible implementation, in a process in which the first control plane node determines the paging area for the UE based on the first location area management information, specifically, when the UE is switched from a connected mode to an idle mode, the first control plane node starts N timers, where durations of the N timers are respectively the reachable time values RTVs corresponding to the N levels of location area identity lists; and
if a first timer is in a timeout state and a second timer is in a non-timeout state, the first control plane node determines an area to which a (q+1)th-level location area identity list in the N levels of location area identity lists belongs, as the paging area; or if the N timers are all in a non-timeout state, the first control plane node determines an area to which a first-level location area identity list in the N levels of location area identity lists belongs, as the paging area, where
the first timer is a timer that is in the N timers and whose duration is a reachable time value RTV corresponding to a qth-level location area identity list in the N levels of location area identity lists, and the second timer is a timer that is in the N timers and whose duration is a reachable time value corresponding to the (q+1)th-level location area identity list in the N levels of location area identity lists, where 1≤q≤(N-1), and q is an integer.

In the foregoing method, one timer is set for each level of location area identity list, to determine the paging area based on a status of the timer.

In a feasible implementation, in a process in which the first control plane node determines the paging area for the UE based on the first location area management information, specifically, when the UE enters an idle mode after performing a periodic location update procedure in an area to which an ith-level location area identity list in the N levels of location area identity lists belongs, the first control plane node starts (N-j) timers, where durations of the (N-j) timers are respectively reachable time values corresponding to a (j+1)th-level location area identity list to an Nth-level location area identity list in the N levels of location area identity lists, where 1<i≤N, j<i, and i and j are both integers; and
if a third timer is in a timeout state and a fourth timer is in a non-timeout state, the first control plane node determines an area to which an (m+1)th-level location area identity list in the N levels of location area identity lists belongs, as the paging area; or if the (N-j) timers are all in a non-timeout state, the first control plane node determines an area to which the (j+1)th-level location area identity list in the N levels of location area identity lists belongs, as the paging area, where
the third timer is a timer that is in the (N-j) timers and whose duration is a reachable time value RTV corresponding to an mth-level location area identity list in the N levels of location area identity lists, and the fourth timer is a timer that is in the (N-j) timers and whose duration is a reachable time value corresponding to the (m+1)th-level location area identity list in the N levels of location area identity lists, where (j+1)≤m≤N, and m is an integer.

In the foregoing method, when the UE is switched from the connected mode to the idle mode, some timers are started, to determine the paging area based on a status of the timer when the UE is switched from the connected mode to the idle mode.

In a feasible implementation, the method further includes: when the UE is switched from a connected mode to an idle mode, starting, by the first control plane node, N timers, where durations of the N timers are respectively the reachable time values RTVs corresponding to the N levels of location area identity lists; and if the N timers are all in a timeout state, identifying, by the first control plane node, the UE as an unreachable state.

In the foregoing method, one timer is set for each level of location area identity list, to determine the paging area based on a status of the timer.

In a feasible implementation, the determining, by a first control plane node, first location area management information of user equipment UE is specifically: determining the first location area management information based on a current location of the UE.

In the foregoing method, the first control plane node determines the first location area management information based on the current location of the UE.

In a feasible implementation, the determining, by the first control plane node, the first location area management information based on a current location of the UE is specifically: determining the first location area management information based on the current location of the UE and information about a location area visited by the UE the previous time; or receiving, by the first control plane node, third location area management information of the UE sent by a second control plane node, and determining the first location area management information based on the current location of the UE and the third location area management information.

In the foregoing method, the first control plane node determines the first location area management information based on the current location of the UE and historical data. The historical data is, for example, the information about the location area visited by the UE the previous time or location area management information allocated by another control plane node to the UE.

In a feasible implementation, the method further includes:
sending, by the first control plane node, second location area management information to the UE, where the second location area management information includes the N levels of location area identity lists, and the PTV corresponding to each level of location area identity list in the N levels of location area identity lists.

In the foregoing method, the first control plane node sends the second location area management information to the UE, so that the UE initiates a location update based on the second location area management information.

According to a second aspect, an embodiment of the present invention provides a location management method. The method is described from a perspective of UE, and the method includes: receiving, by the UE, second location area management information sent by a first control plane node, where the second location area management information includes N levels of location area identity lists, and a periodic time value PTV corresponding to each level of location area identity list in the N levels of location area identity lists, where N is an integer greater than 1; and initiating a location update based on the second location area management information.

In the foregoing method, in a location update process, a periodic location update or an aperiodic location update is initiated based on the second location area management information.

The user equipment UE receives second location area management information sent by a first control plane node, where the second location area management information includes N levels of location area identity lists, and a periodic time value PTV corresponding to each level of location area identity list in the N levels of location area identity lists, and the N levels of location area identity lists include N levels of location area identity lists, where N is an integer greater than 1; and
the UE initiates a location update based on the second location area management information.

The N levels of location area identity lists include at least one Nth-level location area identity list and at least one (n+1)th-level location area identity list; an area to which any one of the at least one (n+1)th-level location area identity list belongs is properly included in one or more of the at least one Nth-level location area identity list; and a periodic time value PTVn corresponding to the Nth-level location area identity list is less than a periodic time value PTV(n+1) corresponding to the (n+1)th level location area identity list, where 1≤n≤(N-1), and n is an integer.

In the foregoing method, layered design of the second location area management information is implemented.

The initiating, by the UE, a location update based on the second location area management information is specifically: when the UE is switched from a connected mode to an idle mode, starting, by the UE, N timers, where durations of the N timers are respectively the periodic time values PTVs corresponding to the N levels of location area identity lists; and
if a fifth timer is in a timeout state, and a highest-level location area identity list that is in the N levels of location area identity lists and to which a current location of the UE belongs is an xth-level location area identity list, initiating, by the UE, a periodic location update, where
the fifth timer is a timer whose duration is a periodic time value PTV corresponding to the xth-level location area identity list, where 1≤x≤N, and x is an integer.

In the foregoing method, one timer is set for each level of location area identity list, to initiate the periodic location update based on a status of the timer.

Alternatively, the initiating, by the UE, a location update based on the second location area management information is specifically: when the UE enters an idle mode after performing a periodic location update procedure in an area to which an ith-level location area identity list in the N levels of location area identity lists belongs, starting, by the UE, (N-j) timers, where durations of the (N-j) timers are respectively periodic time values corresponding to a (j+1)th-level location area identity list to an Nth-level location area identity list in the N levels of location area identity lists, where 1<i≤N, j<i, and i and j are both integers; and
if a sixth timer is in a timeout state, and a highest-level location area identity list that is in the N levels of location area identity lists and to which a current location of the UE belongs is an xth-level location area identity list, initiating, by the UE, a periodic location update, where
the sixth timer is a timer that is in the (N-j) timers and whose duration is a periodic time value PTV corresponding to the xth-level location area identity list, where (j+1)≤x≤N, and x is an integer.

In the foregoing method, when the UE is switched from the connected mode to the idle mode, some timers are started, to initiate the periodic location update based on a status of the timer when the UE is switched from the connected mode to the idle mode.

Alternatively, the initiating, by the UE, a location update based on the second location area management information is specifically:
when the UE is switched from a connected mode to an idle mode, determining, by the UE based on the second location area management information, that a highest-level location area identity list that is in the N levels of location area identity lists and to which a current location of the UE belongs is an xth-level location area identity list, where 1≤x≤N, and x is an integer; and starting a seventh timer, where duration of the seventh timer is a periodic time value corresponding to the xth-level location area identity list; and
if the seventh timer is in a timeout state, initiating, by the UE, a periodic location update.

Alternatively, in an example useful for understanding the invention, the initiating, by the UE, a location update based on the second location area management information is specifically: when a current location of the UE does not belong to an area corresponding to any one of the N levels of location area identity lists, or a current location of the UE does not belong to an area corresponding to a first-level location area identity list in the N levels of location area identity lists, initiating, by the UE, an aperiodic location update.

In the foregoing method, the aperiodic location update is initiated based on the second location area management information.

According to a third aspect, an example useful for understanding the invention provides a control plane node. The control plane node is a first control plane node, and the first control plane node includes:
a processing module, configured to: determine first location area management information of user equipment UE, where the first location area management information includes N levels of location area identity lists, and a periodic time value PTV and a reachable time value RTV that correspond to each level of location area identity list in the N levels of location area identity lists, and the N levels of location area identity lists include N levels of location area identity lists, where N is an integer greater than 1; and determine a paging area for the UE based on the first location area management information; and
a paging module, configured to page the UE in the paging area.

In a feasible implementation, the N levels of location area identity lists include at least one Nth-level location area identity list and at least one (n+1)th-level location area identity list;
an area to which any one of the at least one (n+1)th-level location area identity list belongs is properly included in one or more of the at least one Nth-level location area identity list; and
a periodic time value PTVn corresponding to the Nth-level location area identity list is less than a periodic time value PTV(n+1) corresponding to the (n+1)th-level location area identity list, and a reachable time value RTVn corresponding to the Nth-level location area identity list is equal to (PTVn)+t, where t>0, 1≤n≤(N-1), and n is an integer.

In a feasible implementation, the processing module is specifically configured to: when the UE is switched from a connected mode to an idle mode, start N timers, where durations of the N timers are respectively the reachable time values RTVs corresponding to the N levels of location area identity lists; and
if a first timer is in a timeout state and a second timer is in a non-timeout state, determine an area to which a (q+1)th-level location area identity list in the N levels of location area identity lists belongs, as the paging area; or if the N timers are all in a non-timeout state, determine, by the first control plane node, an area to which a first-level location area identity list in the N levels of location area identity lists belongs, as the paging area, where
the first timer is a timer that is in the N timers and whose duration is a reachable time value RTV corresponding to a qth-level location area identity list in the N levels of location area identity lists, and the second timer is a timer that is in the N timers and whose duration is a reachable time value corresponding to the (q+1)th-level location area identity list in the N levels of location area identity lists, where 1≤q≤(N-1), and q is an integer.

In a feasible implementation, the processing module is specifically configured to: when the UE enters an idle mode after performing a periodic location update procedure in an area to which an ith-level location area identity list in the N levels of location area identity lists belongs, start (N-j) timers, where durations of the (N-j) timers are respectively reachable time values corresponding to a (j+1)th-level location area identity list to an Nth-level location area identity list in the N levels of location area identity lists, where 1<i≤N, j<i, and i and j are both integers; and
if a third timer is in a timeout state and a fourth timer is in a non-timeout state, determine an area to which an (m+1)th-level location area identity list in the N levels of location area identity lists belongs, as the paging area; or if the (N-j) timers are all in a non-timeout state, determine, by the first control plane node, an area to which the (j+1)th-level location area identity list in the N levels of location area identity lists belongs, as the paging area, where
the third timer is a timer that is in the (N-j) timers and whose duration is a reachable time value RTV corresponding to an mth-level location area identity list in the N levels of location area identity lists, and the fourth timer is a timer that is in the (N-j) timers and whose duration is a reachable time value corresponding to the (m+1)th-level location area identity list in the N levels of location area identity lists, where (j+1)≤m≤N, and m is an integer.

In a feasible implementation, the processing module is further configured to: when the UE is switched from a connected mode to an idle mode, start N timers, where durations of the N timers are respectively the reachable time values RTVs corresponding to the N levels of location area identity lists; and
if each of the N timers is in a timeout state, identify the UE as an unreachable state.

In a feasible implementation, the processing module is specifically configured to determine the first location area management information based on a current location of the UE.

In a feasible implementation, the processing module is specifically configured to: determine the first location area management information based on the current location of the UE and information about a location area visited by the UE the previous time; or
receive third location area management information of the UE sent by a second control plane node, and determine the first location area management information based on the current location of the UE and the third location area management information.

In a feasible implementation, the first control plane node further includes:
a transceiver module, configured to send second location area management information to the UE, where the second location area management information includes the N levels of location area identity lists, and the PTV corresponding to each level of location area identity list in the N levels of location area identity lists.

According to a fourth aspect, an embodiment of the present invention provides user equipment UE, including:
a transceiver module, configured to receive second location area management information sent by a first control plane node, where the second location area management information includes N levels of location area identity lists, and a periodic time value PTV corresponding to each level of location area identity list in the N levels of location area identity lists, and the N levels of location area identity lists include N levels of location area identity lists, where N is an integer greater than 1; and
a processing module, configured to initiate a location update based on the second location area management information.

In a feasible implementation, the N levels of location area identity lists include at least one Nth-level location area identity list and at least one (n+1)th-level location area identity list;
an area to which any one of the at least one (n+1)th-level location area identity list belongs is properly included in one or more of the at least one Nth-level location area identity list; and
a periodic time value PTVn corresponding to the Nth-level location area identity list is less than a periodic time value PTV(n+1) corresponding to the (n+1)th level location area identity list, where 1≤n≤(N-1), and n is an integer.

In a feasible implementation, the processing module is specifically configured to: when the UE is switched from a connected mode to an idle mode, start N timers, where durations of the N timers are respectively the periodic time values PTVs corresponding to the N levels of location area identity lists; and
if a fifth timer is in a timeout state, and a highest-level location area identity list that is in the N levels of location area identity lists and to which a current location of the UE belongs is an xth-level location area identity list, initiate a periodic location update, where
the fifth timer is a timer whose duration is a periodic time value PTV corresponding to the xth-level location area identity list, where 1≤x≤N, and x is an integer.

In a feasible implementation, the processing module is specifically configured to: when the UE enters an idle mode after performing a periodic location update procedure in an area to which an ith-level location area identity list in the N levels of location area identity lists belongs, start (N-j) timers, where durations of the (N-j) timers are respectively periodic time values corresponding to a (j+1)th-level location area identity list to an Nth-level location area identity list in the N levels of location area identity lists, where 1<i≤N, j<i, and i and j are both integers; and
if a sixth timer is in a timeout state, and a highest-level location area identity list that is in the N levels of location area identity lists and to which a current location of the UE belongs is an xth-level location area identity list, initiate a periodic location update, where
the sixth timer is a timer that is in the (N-j) timers and whose duration is a periodic time value PTV corresponding to the xth-level location area identity list, where (j+1)≤x≤N, and x is an integer.

In a feasible implementation, the processing module is specifically configured to:
when the UE is switched from a connected mode to an idle mode, determine, based on the second location area management information, that a highest-level location area identity list that is in the N levels of location area identity lists and to which a current location of the UE belongs is an xth-level location area identity list, where 1≤x≤N, and x is an integer; and start a seventh timer, where duration of the seventh timer is the periodic time value corresponding to the xth-level location area identity list; and
if the seventh timer is in a timeout state, initiate a periodic location update.

In a feasible implementation, the processing module is specifically configured to: when a current location of the UE does not belong to an area corresponding to any one of the N levels of location area identity lists, or a current location of the UE does not belong to an area corresponding to a first-level location area identity list in the N levels of location area identity lists, initiate an aperiodic location update.

According to a fifth aspect, an example useful for understanding the invention provides a control plane node. The control plane node is a first control plane node, and the first control plane node includes a processor, a memory, a communications interface, and a system bus, where the memory and the communications interface are connected to the processor by using the system bus, to complete mutual communication; the memory is configured to store a computer executable instruction; the communications interface is configured to communicate with another device; and the processor is configured to run the computer executable instruction, to enable the first control plane node to perform the steps of the method applied to the first control plane node.

According to a sixth aspect, an embodiment of the present invention provides user equipment UE, including a processor, a memory, a communications interface, and a system bus, where the memory and the communications interface are connected to the processor by using the system bus, to complete mutual communication; the memory is configured to store a computer executable instruction; the communications interface is configured to communicate with another device; and the processor is configured to run the computer executable instruction, to enable the UE to perform the steps of the method applied to the UE.

According to a seventh aspect, an example useful for understanding the invention provides a control plane node. The control plane node has a function of implementing an operation of the first control plane node in the foregoing method design. The function may be implemented by hardware, or may be implemented by hardware executing corresponding software. The hardware or the software includes one or more units corresponding to the foregoing function.

In a possible implementation, a structure of the control plane node includes a processor and a transmitter. The processor is configured to support the first control plane node in performing a corresponding function in the foregoing method. The transmitter is configured to: support communication between the control plane nodes, and send information or an instruction used in the foregoing method to the control plane node. The control plane node may further include a memory. The memory is configured to couple to the processor, and stores a necessary program instruction and necessary data for the control plane node.

According to an eighth aspect, an embodiment of the present invention provides UE. The UE has a function of implementing an operation of the UE in the foregoing method design. The function may be implemented by hardware, or may be implemented by hardware executing corresponding software. The hardware or the software includes one or more units corresponding to the foregoing function.

In a possible implementation, a structure of the UE includes a processor and a transmitter. The processor is configured to support the first UE in performing a corresponding function in the foregoing method. The transmitter is configured to: support communication between UEs, and send information or an instruction used in the foregoing method. The UE may further include a memory. The memory is configured to couple to the processor, and stores a necessary program instruction and necessary data for the UE.

According to a ninth aspect, an example useful for understanding the invenion provides a computer storage medium, configured to store a computer software instruction used by the foregoing control plane node, and including a program designed to perform the foregoing aspects.

According to a tenth aspect, an embodiment of the present invention provides a computer storage medium, configured to store a computer software instruction used by the foregoing UE, and including a program designed to perform the foregoing aspects.

According to an eleventh aspect, an example useful for understanding the invenion provides a chip system, including at least one processor, a memory, an input/output portion, and a bus. The at least one processor obtains an instruction in the memory by using the bus, to implement a function of the control plane node in the foregoing method.

According to a twelfth aspect, an embodiment of the present invention provides a chip system, including at least one processor, a memory, an input/output portion, and a bus. The at least one processor obtains an instruction in the memory by using the bus, to implement a designed function of the UE in the foregoing method design.

According to the location management method, the control plane node, and the user equipment that are provided in the embodiments of the present invention, the first control plane node determines the first location area management information of the UE, where the first location area management information includes the N levels of location area identity lists, and the periodic time value PTV and the reachable time value RTV that correspond to each level of location area identity list in the N levels of location area identity lists; and performs the paging management based on the first location area management information. In the process of performing the paging management, the first control plane node determines the paging area in the areas to which the N levels of location area identity lists belong, and performs the paging management only in the paging area, instead of performing the paging management in all the areas corresponding to the N levels of location area identity lists. The paging management is performed in the small range, so that the signaling overheads for the paging management can be reduced, to balance the signaling overheads for the paging management and the signaling overheads for the location update management in the location management process.

### BRIEF DESCRIPTION OF DRAWINGS

FIG. 1A is a schematic diagram of a 5G network architecture to which a location management method is applicable according to the present invention;
FIG. 1B is a schematic diagram of an EPS network architecture to which a location management method is applicable according to the present invention;
FIG. 2A is a flowchart of Embodiment 1 of a location management method according to the present invention;
FIG. 2B is a flowchart of Embodiment 2 of a location management method according to the present invention;
FIG. 3 is an example of a schematic diagram of first TA management information in a location management method according to the present invention;
FIG. 4 is an example of a schematic diagram of a relationship between each level of TAI list and a PTV and an RTV for the corresponding level in a location management method according to the present invention;
FIG. 5A is a signaling diagram of Embodiment 3 of a location management method according to the present invention;
FIG. 5B is a signaling diagram of Embodiment 4 of a location management method according to the present invention;
FIG. 5C is a signaling diagram of Embodiment 5 of a location management method according to the present invention;
FIG. 6 is a flowchart of Embodiment 6 of a location management method according to the present invention;
FIG. 7 is a signaling diagram of Embodiment 7 of a location management method according to the present invention;
FIG. 8 is a signaling diagram of Embodiment 8 of a location management method according to the present invention;
FIG. 9 is a schematic structural diagram of Embodiment 1 of a control plane node according to the present invention;
FIG. 10 is a schematic structural diagram of Embodiment 2 of a control plane node according to the present invention;
FIG. 11 is a schematic structural diagram of Embodiment 1 of UE according to the present invention;
FIG. 12 is a schematic structural diagram of Embodiment 3 of a control plane node according to the present invention; and
FIG. 13 is a schematic structural diagram of Embodiment 2 of UE according to the present invention.

### DESCRIPTION OF EMBODIMENTS

To make the objectives, technical solutions, and advantages of the embodiments of the present invention clearer, the following clearly and completely describes the technical solutions in the embodiments of the present invention with reference to the accompanying drawings in the embodiments of the present invention. Apparently, the described embodiments are some but not all of the embodiments of the present invention. All other embodiments obtained by persons skilled in the art based on the embodiments of the present invention without creative efforts shall fall within the protection scope of the present invention. The following content describes, in detail, specific implementations, structures, features, and effects of the present invention with reference to the accompanying drawings and examples of embodiments.

In the specification, claims, and accompanying drawings of the present invention, the terms "first", "second", "third", "fourth", and so on (if any) are intended to distinguish between similar objects but do not necessarily indicate a specific order or sequence. It should be understood that the data termed in such a way are interchangeable in proper circumstances so that the embodiments of the present invention described herein can be implemented in orders except the order illustrated or described herein. Moreover, the terms "include", "contain" and any other variants mean to cover the non-exclusive inclusion, for example, a process, method, system, product, or device that includes a list of steps or units is not necessarily limited to those steps or units, but may include other steps or units not expressly listed or inherent to such a process, method, product, or device.

Generally, location management includes location update management and paging management. In a location management process, an LTE system allocates one TAI list to each UE, and a mobility management entity (Mobility Management Entity, MME) manages a location of the UE based on the TAI list. In a location update management process, when the UE moves in a cell indicated by the TAI list, the TAI list is not updated. When the UE moves to another cell other than the cell indicated by the TAI list, the TAI list needs to be updated. In this case, the MME reallocates one TAI list to the UE. In a paging management process, when there is a service requirement, the MME sends a paging message in all cells included in the TAI list.

During the foregoing location management, signaling overheads for the paging management are inversely proportional to information overheads for the update management. Specifically, when the TAI list is excessively large, the TAI list includes excessive cells, paging load increases accordingly, leading to higher signaling overheads for the paging management, and causing problems such as a paging delay and prolonging of end-to-end connection duration; or when the TAI list is excessively small, the TAI list includes a smaller quantity of cells, and although a problem of excessively high signaling overheads for the paging management can be avoided, a location update is performed more frequently, to be specific, the signaling overheads for the location update management are increased. Therefore, how to balance the signaling overheads for the paging management and the information overheads for the update management in the location management process is actually a problem urgently needing to be resolved in the industry.

In view of this, embodiments of the present invention provide a location management method, a control plane node, and user equipment, to balance signaling overheads for paging management and information overheads for update management in a location management process.

The location management method described in this specification is applicable to various wireless communications systems having a plurality of types of terminals. The wireless communications system is, for example, a Global System for Mobile Communications (Global System for Mobile communications, GSM), a Code Division Multiple Access (Code Division Multiple Access, CDMA) system, a Time Division Multiple Access (Time Division Multiple Access, TDMA) system, a Wideband Code Division Multiple Access (Wideband Code Division Multiple Access Wireless, WCDMA) system, a Frequency Division Multiple Access (Frequency Division Multiple Addressing, FDMA) system, an Orthogonal Frequency Division Multiple Access (Orthogonal Frequency-Division Multiple Access, OFDMA) system, a single-carrier FDMA (SC-FDMA) system, a general packet radio service (General Packet Radio Service, GPRS) system, a Long Term Evolution (Long Term Evolution, LTE) system, an E-UTRA system, a 5G mobile communications system, an evolved packet core (Evolved Packet Core, EPS) system, and another communications system of this type.

User equipment in the embodiments of the present invention may communicate with one or more core networks by using a radio access network (for example, RAN, Radio Access Network). A wireless terminal may be a mobile terminal such as a mobile phone (or referred to as a "cellular" phone) and a computer having a mobile terminal, for example, may be a portable, pocket-sized, handheld, computer built-in, or in-vehicle mobile apparatus, which exchange voice and/or data with the radio access network. For example, it may be a device such as a personal communications service (Personal Communication Service, PCS) phone, a cordless telephone set, a Session Initiation Protocol (SIP) phone, a wireless local loop (Wireless Local Loop, WLL) station, or a personal digital assistant (Personal Digital Assistant, PDA). The wireless terminal may also be referred to as a system, a subscriber unit (Subscriber Unit), a subscriber station (Subscriber Station), a mobile station (Mobile Station), a mobile console (Mobile), a remote station (Remote Station), a remote terminal (Remote Terminal), an access terminal (Access Terminal), a user terminal (User Terminal), a user agent (User Agent), a user device (User Device), user equipment (User Equipment), a PUE, a VUE, or the like.

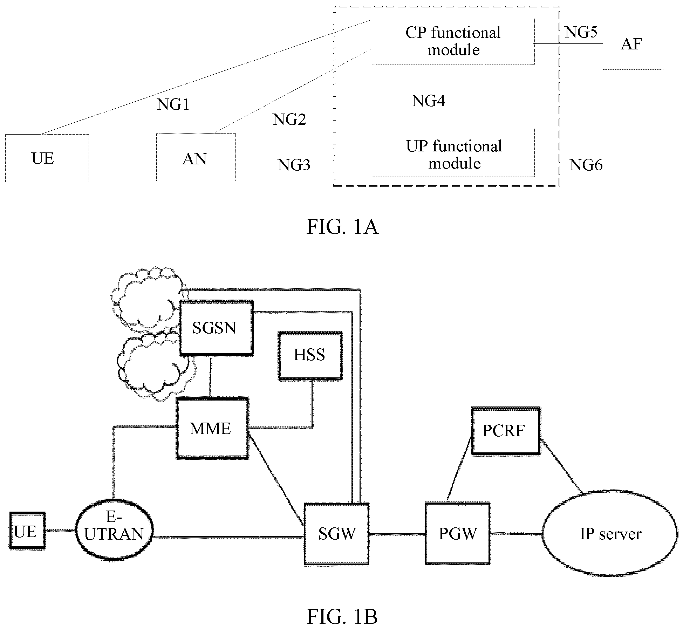

A control plane node in this application may be an MME in an EPS network, or is a control plane (Control Plane, CP) or mobility management (Mobility Management, MM) functional module in a 5G network, or the like. This is not limited in this application. Specifically, refer to FIG. 1A and FIG. 1B. FIG. 1A is a schematic diagram of a 5G network architecture to which a location management method is applicable according to the present invention. FIG. 1B is a schematic diagram of an EPS network architecture to which a location management method is applicable according to the present invention.

Referring to FIG. 1A, network elements in the system architecture include UE, an access network (Access Network, AN), a CP functional module, a user plane (User Plane, UP) functional module, an AF, and the like. Various networks are connected by using a next generation (Next Generation, NG) network interface, for example, NG1 to NG6 in the figure. The CP functional module has a physical function of a control plane, includes one or more CPs, and may be divided into mobility management (Mobility Management, MM) and session management (Session Management, SM).

Referring to FIG. 1B, network elements in the system architecture include UE, an E-UTRAN, an MME, a serving GPRS support node (Serving GPRS Support Node, SGSN), a home subscriber server (Home Subscriber Server, HSS), a serving gateway (Service Gateway, SGW), a PDN gateway (PDN Gateway, PGW), a policy and charging rules function (Policy and Charging Rules Function, PCRF) server, an IP server, and the like.

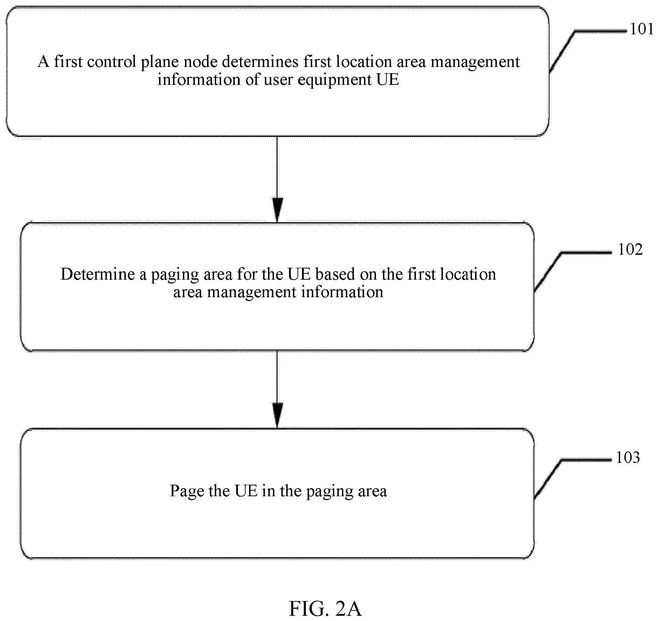

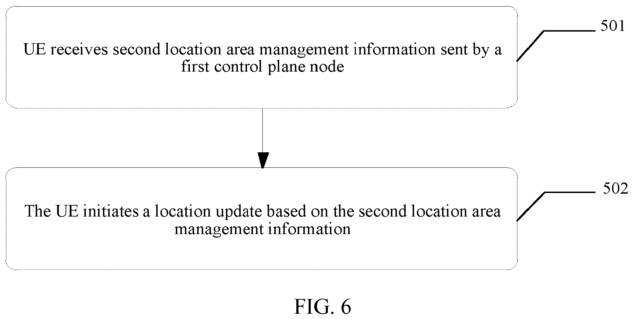

Based on FIG. 1A and FIG. 1B, the technical solutions in the present invention are described in detail below. Specifically, refer to FIG. 2A and FIG. 6.

FIG. 2A is a flowchart of Embodiment 1 of a location management method according to the present invention. In this embodiment, the present invention is described in detail from a perspective of paging management. This embodiment includes the following steps.

101: A first control plane node determines first location area management information of user equipment UE.

The first control plane node may be a control plane node currently accessed by the UE. For example, the first control plane node may be a CP or MM in 5G, and may be an MME in an EPS network.

The first location area management information includes N levels of location area identity lists, and a periodic time value (Periodic Time Value, PTV) and a reachable time value (Reachable Time Value, RTV) that correspond to each level of location area identity list in the N levels of location area identity lists, and the N levels of location area identity lists include N levels of location area identity lists, where N is an integer greater than 1.

Specifically, the first control plane node may determine one piece of first location area management information for each UE. The first location area management information is referred to as layered location area management information, and the first location area management information may be divided into N layers based on a value of N.

It should be noted that, there is at least one location area identity list at a same level in the N levels of location area identity lists, and location area identity lists in the location area identity list at the same level have a same PTV and a same RTV.

In this step, the first control plane node determines the first location area management information of the UE, to be specific, determines location area identity lists at various levels (also referred to as different layers, and indicated by a level, "L" for short) and a PTV and an RTV for a corresponding level, for example, a location area identity list at L1, and PTV1 and RTV1; a location area identity list at L2, and PTV2 and RTV2; ...; and a location area identity list at Ln, and PTVn and RTVn.

The N levels of location area identity lists include at least one Nth-level location area identity list and at least one (n+1)th-level location area identity list; an area to which any one of the at least one (n+1)th-level location area identity list belongs is properly included in one or more of the at least one Nth-level location area identity list; and a periodic time value PTVn corresponding to the Nth-level location area identity list is less than a periodic time value PTV(n+1) corresponding to the (n+1)th level location area identity list, and a reachable time value RTVn corresponding to the Nth-level location area identity list is equal to (PTVn)+t, where t>0, 1≤n≤(N-1), and n is an integer.

In this embodiment of the present invention, location management may be performed in a unit of a TA or the like, for example, a cell (Cell). Unless otherwise specified, a TA is used as an example below.

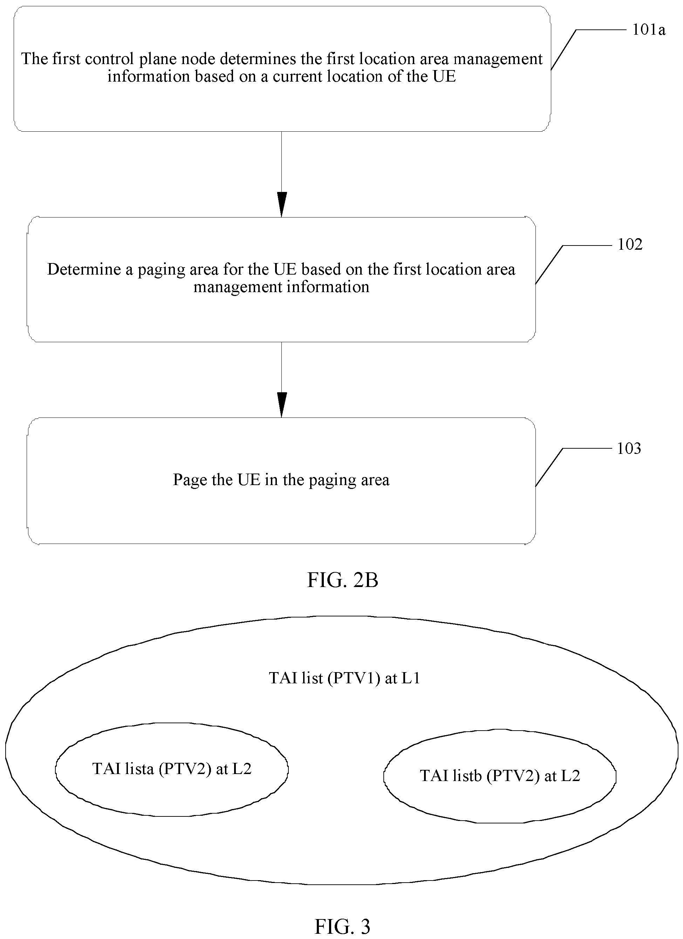

An example in which N=2 and the location management is specifically performed in a unit of a TA is used below to describe the first location area management information, namely, first TA management information in detail. Specifically, refer to FIG. 3. FIG. 3 is an example of a schematic diagram of the first TA management information in the location management method according to the present invention.

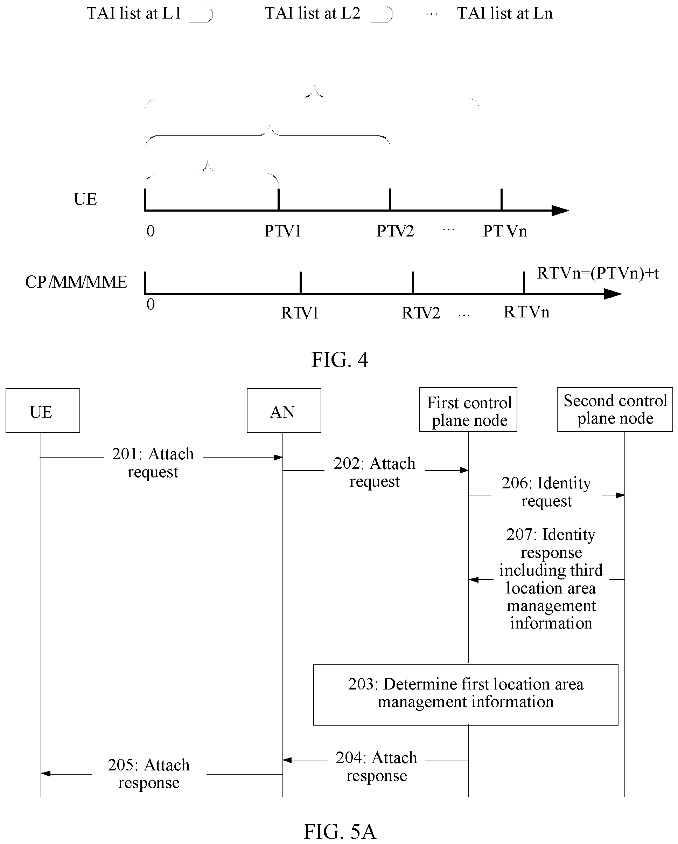

Referring to FIG. 3, when N=2, the first TA management information includes a TAI list at L1 and a TAI list at L2; the TAI list at L1 corresponds to the largest tracking area; a tracking area of the TAI list at L2 is a subset of the tracking area of the TAI list at L1; and there are two discontinuous tracking areas at the level L2, for example, TAI list a at L2 and TAI list b at L2 in the figure. For a relationship between each level of TAI list and a PTV and an RTV for the corresponding level, refer to FIG. 4. FIG. 4 is an example of a schematic diagram of the relationship between each level of TAI list and the PTV and the RTV for the corresponding level in the location management method according to the present invention.

Referring to FIG. 4, the first location area management information includes the N levels of TAI lists, and the TAI list at L1⊃the TAI list at L2⊃ ... the TAI list at Ln; PTV1<PTV2< ... PTVn; and RTVn=(PTVn)+t (t≥0). There is at least one TAI list at L2 and there is at least one TAI list at a level higher than L2; and in TAI lists at a same level, areas to which different TAI lists belong may be discontinuous. Location area identity lists in the location area identity lists at the same level have a same PTV and a same RTV For example, TAI lists at the level L2 include TAI list a at L2 and TAI list b at L2, areas to which TAI list a and TAI list b belong are discontinuous, and TAI list a and TAI list b have a same PTV and a same RTV.

102: The first control plane node determines a paging area for the UE based on the first location area management information.

Specifically, when the UE is switched from a connected mode to an idle mode, the first control plane node determines the paging area for the UE in areas to which the N levels of location area identity lists belong. The paging area is some or all of the areas to which the N levels of location area identity lists belong.

103: The first control plane node pages the UE in the paging area.

When needing to page the UE, the first control plane node pages the UE in the determined paging area. Because the paging area may be some of the areas to which the N levels of location area identity lists belong, the first control plane node pages the UE only in some of the areas to which the N levels of location area identity lists belong, without paging the UE in all the areas corresponding to the N levels of location area identity lists. The paging area may also include all areas to which first-level location area identity lists in the N levels of location area identity lists belong. Because the area to which the first-level location area identity list belongs is the largest area, the paging area includes all the areas to which the N levels of location area identity lists belong. In this case, for paging management, refer to existing paging management, and details are not described herein again.

According to the location management method provided in this embodiment of the present invention, the first control plane node determines the first location area management information of the UE, where the first location area management information includes the N levels of location area identity lists, and the periodic time value PTV and the reachable time value RTV that correspond to each level of location area identity list in the N levels of location area identity lists; and performs the paging management based on the first location area management information. In the process of performing the paging management, the first control plane node determines the paging area in the areas to which the N levels of location area identity lists belong, and performs the paging management only in the paging area, instead of always performing the paging management in all the areas corresponding to the N levels of location area identity lists. The paging management is performed in a small range, so that signaling overheads for the paging management can be reduced, to balance the signaling overheads for the paging management and signaling overheads for location update management in a location management process.

Optionally, in a first implementation scenario of the foregoing embodiment, step 102 may be specifically implemented in the following two manners:

### Manner 1

When the UE is switched from the connected mode to the idle mode, the first control plane node starts N timers, where durations of the N timers are respectively the reachable time values RTVs corresponding to the N levels of location area identity lists; and
if a first timer is in a timeout state and a second timer is in a non-timeout state, the first control plane node determines an area to which a (q+1)th-level location area identity list in the N levels of location area identity lists belongs, as the paging area; or if the N timers are all in a non-timeout state, the first control plane node determines the area to which the first-level location area identity list in the N levels of location area identity lists belongs, as the paging area, where
the first timer is a timer that is in the N timers and whose duration is a reachable time value RTV corresponding to a qth-level location area identity list in the N levels of location area identity lists, and the second timer is a timer that is in the N timers and whose duration is a reachable time value corresponding to the (q+1)th-level location area identity list in the N levels of location area identity lists, where 1≤q≤(N-1), and q is an integer.

Specifically, in Manner 1, after the first control plane node determines the first location area management information, when the UE is switched from the connected mode to the idle mode, the first control plane node starts the N timers, and determines the paging area depending on whether the timer times out. For example, referring to FIG. 4, when the first control plane node pages the UE, if all the timers are in the non-timeout state, the first control plane node performs the paging management in an area to which the TAI list at L1 belongs; or when a timer corresponding to the TAI list at L1 is in the timeout state, and a timer corresponding to the TAI list at L2 is in the non-timeout state, the first control plane node performs the paging management in an area to which the TAI list at L2 belongs. If all the timers are in the timeout state, the first control plane node identifies the UE as an unreachable state.

### Manner 2

When the UE enters the idle mode after performing a periodic location update procedure in an area to which an ith-level location area identity list in the N levels of location area identity lists belongs, the first control plane node starts (N-j) timers, where durations of the (N-j) timers are respectively reachable time values corresponding to a (j+1)th-level location area identity list to an Nth-level location area identity list in the N levels of location area identity lists, where 1<i≤N, j<i, and i and j are both integers; and
if a third timer is in a timeout state and a fourth timer is in a non-timeout state, the first control plane node determines an area to which an (m+1)th-level location area identity list in the N levels of location area identity lists belongs, as the paging area; or if the (N-j) timers are all in a non-timeout state, the first control plane node determines an area to which the (j+1)th-level location area identity list in the N levels of location area identity lists belongs, as the paging area, where
the third timer is a timer that is in the (N-j) timers and whose duration is a reachable time value RTV corresponding to an mth-level location area identity list in the N levels of location area identity lists, and the fourth timer is a timer that is in the (N-j) timers and whose duration is a reachable time value corresponding to the (m+1)th-level location area identity list in the N levels of location area identity lists, where (j+1)≤m≤N, and m is an integer.

Specifically, in Manner 2, if the UE re-enters the idle mode from the connected mode after receiving second location area management information, for example, the UE enters the idle mode after performing the periodic location update procedure in the area to which the ith-level location area identity list belongs, the first control plane node starts the (N-j) timers corresponding to the (j+1)th-level location area identity list to the Nth-level location area identity list, to be specific, the first control plane node enables the (N-j) timers to start timing from an initial value again. For example, assuming that the RTV is 20, if a timing manner is countdown, even if the timer currently counts to any value less than 20, when the timer is started, the timer starts timing from 20 again. Similarly, if a timing manner is count-up, also assuming that the RTV is 20, even if the timer currently counts to any value between 1 and 20, when the timer is started, the timer starts timing from 1 again.

Optionally, in a second implementation scenario of the foregoing embodiment, the method further includes:
when the UE is switched from the connected mode to the idle mode, starting, by the first control plane node, N timers, where durations of the N timers are respectively the reachable time values RTVs corresponding to the N levels of location area identity lists; and
if the N timers are all in a timeout state, identifying, by the first control plane node, the UE as an unreachable state.

Specifically, if all the timers are in the timeout state, the first control plane node marks the UE as the unreachable state, and marks the UE as a detached state after a period of time.

It should be noted that, in embodiments of the present invention, the non-timeout state and the timeout state of the timer may be as follows: The timer starts timing from a preset initial value, and if a timing value reaches duration of the timer, the timer is in the timeout state; or if a timing value does not reach duration of the timer, the timer is in the non-timeout state. Apparently, the timeout state and the non-timeout state of the timer are the prior art. For example, if the timer starts countdown, and the RTV is 20, after the timer is started, the timer starts timing from 20, and when 0 is counted, it indicates that the timer times out; or if the timer starts count-up, still using an example in which the RTV is 20, after the timer is started, the timer starts timing from 1, and when 20 is counted, it indicates that the timer times out. Apparently, that the timer is in the timeout state can be replaced with that the timer times out, and that the timer is in the non-timeout state can be replaced with that the timer does not time out.

Optionally, in a third implementation scenario of the foregoing embodiment, refer to FIG. 2B. FIG. 2B is a flowchart of Embodiment 2 of a location management method according to the present invention, and step 101 may specifically include the following step:
101a: The first control plane node determines the first location area management information based on a current location of the UE.

For example, circles having different radii are drawn by using the UE as a circle center. The circles having different radii correspond to different levels of location area identity lists. Further, a plurality of non-overlapping areas may be determined in a same circle, and the plurality of areas correspond to different location area identity lists at a same level.

For another example, different ellipses are drawn by using the UE as a center. The different ellipses correspond to different levels of location area identity lists. Further, a plurality of non-overlapping areas may be determined in a same ellipse, and the plurality of areas correspond to different location area identity lists at a same level.

In addition, in the process of determining the first location area management information, the first control plane node may further consider a capability of or a service type supported by an access point such as an eNB in LTE or an access network (Access Network, AN) in an EPS, a distance between the UE and the access point, and the like.

Further, 101a may include:
determining, by the first control plane node, the first location area management information based on the current location of the UE and information about a location area visited by the UE the previous time; or
receiving, by the first control plane node, third location area management information of the UE sent by a second control plane node, and determining the first location area management information based on the current location of the UE and the third location area management information.

When a first location area is determined based on the current location and the information about the location area visited by the UE the previous time, the first location area management information is determined by referring to the information about the location area visited the previous time and the current location of the UE. For example, still referring to FIG. 4, for example, when the location area visited by the UE the previous time is an area identified by TAIx, if the current location is in an area identified by TAIy after the UE enters the idle mode, the first control plane node determines the first location area management information for the UE based on TAIx and TAIy.

When the first location area management information is determined based on the current location and the third location area management information, the UE sets, by referring to an RTV and a PTV that correspond to each level of location area identity list in the third location area management information, an RTV and a PTV that correspond to each level of location area identity list in the first location area management information.

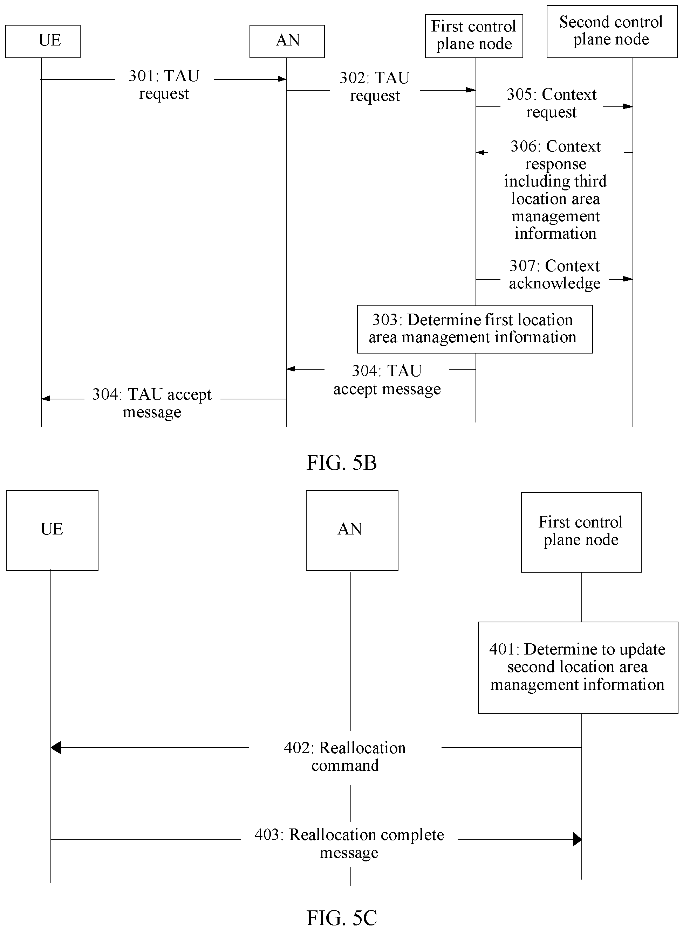

Next, how the first control plane node determines the first location area management information is described in detail by using several specific embodiments. Specifically, refer to FIG. 5A, FIG. 5B, and FIG. 5C.

FIG. 5A is a signaling diagram of Embodiment 3 of a location management method according to the present invention. The method includes the following steps.

201: UE sends an attach request to an AN

In this step, when accessing a network, the UE sends the attach request (Attach Request) to the AN. Optionally, the attach request includes management information of a location area visited by the UE the previous time (to be specific, recently visited).

202: The AN sends the attach request to a first control plane node.

203: The first control plane node determines first location area management information.

Specifically, when the first control plane node determines that location area management information needs to be allocated, if the attach request includes information about the location area visited the previous time, the first control plane node may determine the first location area management information based on the information and a current location of the UE; or if the attach request does not include information about the location area visited the previous time, the first control plane node may determine the first location area management information based on a current location of the UE.

Further, optionally, the first control plane node further needs to consider a capability of an access node in each TAI.

204: The first control plane node sends an attach response to the AN

205: The AN sends the attach response to the UE.

If a first control plane node selected by the UE in an attach procedure is the same as a first control plane node used before detach, 201 to 205 are performed; otherwise, if a first control plane node selected by the UE in the attach procedure is different from the first control plane node used before detach, before 203, the method further includes the following steps.

206: The first control plane node sends an identity request to a second control plane node.

In this step, the first control plane node sends the identity request (Identification Request) to the second control plane node.

207: The second control plane node sends, to the first control plane node, an identity response including third location area management information.

The third location area management information is location area management information configured by the second control plane node for the UE, and the third location area management information includes different levels of TAI lists, and optionally includes a PTV and an RTV for a corresponding level.

If 206 and 207 are performed, in 203, the first control plane node further needs to consider the third location area management information when determining the first location area management information.

If the third location area management information is understood as historical data, it can be learned from the foregoing descriptions that, when there is no historical data or historical data is unavailable, the first control plane node determines the first location area management information based on the current location of the UE; or if there is historical data, in 203, that the first control plane node determines first location area management information optionally includes: the first control plane node updates the first location area management information based on the third location area management information allocated by the second control plane node to the UE.

In the embodiment shown in FIG. 5A, the UE obtains the first location area management information by using the attach procedure.

FIG. 5B is a signaling diagram of Embodiment 4 of a location management method according to the present invention. The method includes the following steps.

301: UE sends a TAU request to an AN

In this step, when accessing a network, the UE sends the tracking area update (Tracking Area Update) request to the AN. Optionally, the request includes information about a location area visited the previous time, for example, a location area identity.

302: The AN sends the TAU request to a first control plane node.

303: The first control plane node determines first location area management information.

Specifically, the first control plane node determines the first location area management information based on the information about the location area visited the previous time and information about a current location of the UE. Further, the first control plane node optionally determines the first location area management information based on a capability of or a service supported by an access node in the location area.

304: The first control plane node sends a TAU accept message to the UE.

In this step, the first control plane node sends the TAU accept message, namely, TAU Accept to the UE.

If the access node selects a new control plane node in a process in which the UE performs a TAU, before 303, the method further includes the following steps.

305: The first control plane node sends a context request to a second control plane node.

In this step, the first control plane node sends the context request (Context Request) to the second control plane node.

306: The second control plane node sends, to the first control plane node, a context response including the third location area management information.

The third location area management information is location area management information configured by the second control plane node for the UE before the UE re-enters an idle mode, and the third location area management information includes different levels of TAI lists and optionally includes a PTV and an RTV for a corresponding level. The context response is, for example, Context Response.

307: The first control plane node sends a context acknowledge (Context Acknowledge) to the second control plane node.

If 305 to 307 are performed, in 303, the first control plane node determines the first location area management information based on the TAU request and the third location area management information.

If the third location area management information is understood as historical data, it can be learned from the foregoing descriptions that, when there is no historical data or historical data is unavailable, the first control plane node determines the first location area management information based on information about the current location of the UE; or if there is historical data, in 303, that the first control plane node determines first location area management information optionally includes: the first control plane node updates the first location area management information based on the third location area management information allocated by the second control plane node to the UE.

In the embodiment shown in FIG. 5B, the UE obtains the first location area management information by using the TAU procedure.

FIG. 5C is a signaling diagram of Embodiment 5 of a location management method according to the present invention. The method includes the following steps.

401: A first control plane node determines to update second location area management information.

402: The first control plane node sends a reallocation command to UE.

The reallocation command includes updated location area management information.

403: The UE sends a reallocation complete message to the first control plane node.

In 401 to 403, when determining to update the second location area management information of the UE, the first control plane node sends the reallocation command to the UE, to update the second location area management information.

In the embodiment shown in FIG. 5C, the second location area management information is updated.

FIG. 6 is a flowchart of Embodiment 6 of a location management method according to the present invention. In this embodiment, the present invention is described in detail from a perspective of a location update. This embodiment includes the following steps.

501: UE receives second location area management information sent by a first control plane node.

The first control plane node may be a control plane node currently accessed by the UE. For example, the first control plane node may be a CP or MM in 5G, and may be an MME in an EPS network.

The second location area management information may include N levels of location area identity lists, and a periodic time value PTV corresponding to each level of location area identity list in the N levels of location area identity lists.

The N levels of location area identity lists include N levels of location area identity lists, where N is an integer greater than 1.

For the N levels of location area identity lists, and the periodic time value PTV corresponding to each level of location area identity list in the N levels of location area identity lists, specifically, refer to related descriptions in the embodiment shown in FIG. 2A, and details are not described again.

In addition, the second location area management information is determined by the first control plane node, and refer to step 101 in FIG. 2A. After determining first location area management information, the first control plane node determines the second location area management information in the first location area management information and sends the second location area management information to the UE. Correspondingly, the UE receives the second location area management information. The second location area management information does not include a reachable time value RTV corresponding to each level of location area identity list in the N levels of location area identity lists.

502: The UE initiates a location update based on the second location area management information.

In this step, the initiated location update may be a periodic location update or an aperiodic location update.

Specifically, if a location area identity list to which a current location of the UE belongs is in the N levels of location area identity lists, and a timer corresponding to a highest-level location area identity list to which the current location of the UE belongs times out, the periodic location update is initiated. In this case, the first control plane node may not allocate new second location area management information to the UE. If a location area identity list to which a current location of the UE belongs is not in the N levels of location area identity lists, the aperiodic location update is initiated. It should be noted that, the initiating a location update may be: performing a periodic location update procedure or an aperiodic location update procedure in 3G or 4G, or may be: performing a location update procedure in a 5G technology; or may be: sending, by the UE, a request message to the first control plane node. The request message is used to indicate that the UE is reachable and indicate a reachable location. For example, the request message may be a location area update (Location Area Update, LAU) message or a tracking area update (Tracking Area Update, TAU) message, or may be another message. This is not limited herein.

According to the location management method provided in this embodiment of the present invention, the UE receives the second location area management information sent by the first control plane, where the second location area management information includes the N levels of location area identity lists, and the periodic time value PTV corresponding to each level of location area identity list in the N levels of location area identity lists, and the N levels of location area identity lists include the N levels of location area identity lists, where N is an integer greater than 1; and initiates the location update based on the second location area management information. In a location update process, the periodic location update or the aperiodic location update is initiated based on the second location area management information.

Optionally, in a first scenario of the foregoing embodiment, step 502 may be specifically implemented in the following four manners:

### Manner 3

When the UE is switched from a connected mode to an idle mode, the UE starts N timers, where durations of the N timers are respectively the periodic time values PTVs corresponding to the N levels of location area identity lists; and
if a fifth timer is in a timeout state, and the highest-level location area identity list that is in the N levels of location area identity lists and to which the current location of the UE belongs is an xth-level location area identity list, the UE initiates the periodic location update, where
the fifth timer is a timer whose duration is a periodic time value PTV corresponding to the xth-level location area identity list, where 1≤x≤N, and x is an integer.

Specifically, if the fifth timer times out, the periodic location update is initiated; or if the fifth timer does not time out, the periodic location update is not initiated. For example, referring to FIG. 4, when x=1, to be specific, the highest-level location area identity list to which the current location of the UE belongs is a TAI list at L1 in the N levels of location area identity lists, PTV1 is used, and if the fifth timer exceeds PTV1, the periodic location update procedure is performed; otherwise, the periodic location update procedure is not performed;
when X=2, to be specific, the highest-level location area identity list to which the current location of the UE belongs is a TAI list at L2 in the N levels of location area identity lists, PTV2 is used, and if the fifth timer exceeds PTV2, the periodic location update procedure is performed; otherwise, the periodic location update procedure is not performed;
..; or
when x=n, to be specific, the highest-level location area identity list to which the current location of the UE belongs is a TAI list at Ln in the N levels of location area identity lists, PTn is used, and if the fifth timer exceeds PTVn, the periodic location update procedure is performed; otherwise, the periodic location update procedure is not performed.

It can be learned from the foregoing descriptions that, in the location update procedure, when the UE moves between areas identified by different levels of TAI lists, the UE determines, based on a status of a timer corresponding to a target-level TAI list, whether to perform the periodic location update procedure.

### Manner 4

When the UE enters an idle mode after performing the periodic location update procedure in an area to which an ith-level location area identity list in the N levels of location area identity lists belongs, the UE starts (N-j) timers, where durations of the (N-j) timers are respectively periodic time values corresponding to a (j+1)th-level location area identity list to an Nth-level location area identity list in the N levels of location area identity lists, where 1<i≤N, j<i, and i and j are both integers; and
if a sixth timer is in a timeout state, and the highest-level location area identity list that is in the N levels of location area identity lists and to which the current location of the UE belongs is an xth-level location area identity list, the UE initiates the periodic location update, where
the sixth timer is a timer that is in the (N-j) timers and whose duration is a periodic time value PTV corresponding to the xth-level location area identity list, where (j+1)≤x≤N, and x is an integer.

Specifically, in Manner 4, an area to which a higher-level location area identity list belongs is properly included in an area to which a lower-level location area identity list belongs, and the current location of the UE may belong to a plurality of location area identity lists. Therefore, in the foregoing process, in location area identity lists to which the current location of the UE belongs, the highest-level location area identity list is used as the xth-level location area identity list. For example, referring to FIG. 4, when the current location of the UE belongs to TAIx, the current location of the UE belongs to both an area to which the TAI list at L1 belongs and an area to which TAI list a at L2 belongs, and the highest-level location area identity list to which the current location of the UE belongs is TAI list a at L2.

### Manner 5

When the UE is switched from a connected mode to an idle mode, the UE determines, based on the second location area management information, that the highest-level location area identity list that is in the N levels of location area identity lists and to which the current location of the UE belongs is an xth-level location area identity list, where 1≤x≤N, and x is an integer; and starts a seventh timer, where duration of the seventh timer is a periodic time value corresponding to the xth-level location area identity list; and
if the seventh timer is in a timeout state, the UE initiates the periodic location update.

Specifically, after the UE receives the second location area management information, for the UE, because the current location of the UE is known, when the UE is switched from the connected mode to the idle mode, the timer corresponding to the location area identity list to which the current location belongs is started, and whether to initiate the periodic location update is determined based on a status of the timer.

### Manner 6

When the current location of the UE does not belong to an area corresponding to any one of the N levels of location area identity lists, or the current location of the UE does not belong to an area corresponding to a first-level location area identity list in the N levels of location area identity lists, the UE initiates the aperiodic location update.

Specifically, in Manner 6, when the UE is in the idle mode, when the UE moves to the outside of areas to which the N levels of TAI lists belong, the UE immediately performs the aperiodic location update procedure.

It can be learned with reference to FIG. 2A and FIG. 6 that, in the embodiments of the present invention, two timers are set for each level of location area identity list and are respectively used for location update management and paging management. Duration of the timer used for the paging management is set by the first control plane node based on an RTV, and duration of the timer used for the location update management is set by the UE based on a PTV.

An example in which the first location area management information is specifically first TA management information and the second location area management information is specifically second TA management information is used below. When the first location area management information remains unchanged, the location management method is described in detail from a perspective that the UE enters the idle mode from the connected mode the first time, and a perspective that the UE re-enters the idle mode from the connected mode.

First, paging management when the UE enters the idle mode from the connected mode the first time is described.

In a paging management process, when the UE is switched from the connected mode to the idle mode, the first control plane node first starts the N timers, where the durations of the N timers are respectively the reachable time values RTVs corresponding to the N levels of location area identity lists; when any one of the N timers times out, the first control plane node identifies the timer that times out as the timeout state. During specific implementation, the timer may be a countdown timer, for example, the RTV is 20, so that after the timer is started, the timer starts countdown from 20, and when the countdown reaches 0, it indicates that the timer times out; or the timer may be a count-up timer, and still using an example in which the RTV is 20, after the timer is started, the timer starts count-up from 1, and when 20 is counted, it indicates that the timer times out. Next, if a first timer is identified as the timeout state and a status of a second timer is not identified as the timeout state, the first control plane node determines an area to which a (q+1)th-level location area identity list in the N levels of location area identity lists belongs, as a paging area; or if the N timers are all in a non-timeout state, the first control plane node determines the area to which the first-level location area identity list in the N levels of location area identity lists belongs, as a paging area. The first timer is a timer that is in the N timers and whose duration is a reachable time value RTV corresponding to a qth-level location area identity list in the N levels of location area identity lists, and the second timer is a timer that is in the N timers and whose duration is a reachable time value corresponding to the (q+1)th-level location area identity list in the N levels of location area identity lists, where 1≤q≤(N-1), and q is an integer.

In the foregoing process, after the first control plane node determines the first location area management information, when the UE is switched from the connected mode to the idle mode, the N timers are started, and when any one of the N timers times out, the first control plane node identifies the timer that times out as the timeout state, and determines the paging area depending on whether the timer times out. For example, referring to FIG. 4, when the first control plane node pages the UE, if none of the timers is marked as the timeout state, the first control plane node performs the paging management in the area to which the TAI list at L1 belongs; or when the first control plane node identifies a timer corresponding to the TAI list at L1 as the timeout state, and does not identify a timer corresponding to the TAI list at L2 as the timeout state, the first control plane node performs the paging management in the area to which the TAI list at L2 belongs.

Further, when the first control plane node identifies all the timers as the timeout state, the first control plane node marks the UE as an unreachable state, and marks the UE as a detach state after a period of time.

Second, paging management when it is not the first time for the UE to enter the idle mode from the connected mode is described.

If the UE re-enters the idle mode from the connected mode after receiving the second location area management information, for example, the UE re-enters the idle mode after performing the periodic location update procedure, a location management procedure is as follows:
When the UE enters the idle mode after performing the periodic location update procedure in the area to which the ith-level location area identity list in the N levels of location area identity lists belongs, the first control plane node first starts the (N-j) timers, where the durations of the (N-j) timers are respectively the reachable time values corresponding to the (j+1)th-level location area identity list to the Nth-level location area identity list in the N levels of location area identity lists, where 1<i≤N, j<i, and i and j are both integers. When any one of the (N-j) timers times out, the first control plane node identifies the timer that times out as the timeout state. Next, if a third timer is identified as the timeout state and a fourth timer is not identified as the timeout state, the first control plane node determines an area to which an (m+1)th-level location area identity list in the N levels of location area identity lists belongs, as a paging area; or if the (N-j) timers are all in a non-timeout state, the first control plane node determines an area to which the (j+1)th-level location area identity list in the N levels of location area identity lists belongs, as a paging area. The third timer is a timer that is in the (N-j) timers and whose duration is a reachable time value RTV corresponding to an mth-level location area identity list in the N levels of location area identity lists, and the fourth timer is a timer that is in the (N-j) timers and whose duration is a reachable time value corresponding to the (m+1)th-level location area identity list in the N levels of location area identity lists, where (j+1)≤m≤N, and m is an integer.

In the process, when the UE enters the idle mode after performing the periodic location update procedure in the area to which the ith-level location area identity list belongs, timers corresponding to the first-level location area identity list to a jth-level location area identity list are marked as the timeout state, and timers respectively corresponding to the (j+1)th-level location area identity list to the Nth-level location area identity list all have been run for a period of time. In this case, when the first control plane node starts the (N-j) timers corresponding to the (j+1)th-level location area identity list to the Nth-level location area identity list, the (N-j) timers are instructed to start timing from an initial value again. For example, if the timer is a countdown timer, assuming that the RTV is 20, even if the timer currently counts to any value less than 20, when the timer is started, the timer starts timing from 20 again. Similarly, if the timer is a count-up timer, also assuming that the RTV is 20, even if the timer currently counts to any data between 1 and 20, when the timer is started, the timer starts timing from 1 again.

Next, location update management when the UE enters the idle mode from the connected mode is described.

In a location update management process, when the UE is switched from the connected mode to the idle (Idle) state the first time after receiving the second TA management information sent by the first control plane node, the UE first starts the N timers, where the durations of the N timers are respectively the periodic time values PTVs corresponding to the N levels of location area identity lists. When any one of the N timers times out, the UE identifies the timer that times out as the timeout state. Next, if the fifth timer is identified as the timeout state, and the highest-level location area identity list to which the current location of the UE belongs is the xth-level location area identity list in the N levels of location area identity lists, the UE initiates the periodic location update. The fifth timer is a timer that is in the N timers and whose duration is the periodic time value PTV corresponding to the xth-level location area identity list, where 1≤x≤(N-1), and x is an integer. In the process, if the fifth timer is not identified as the timeout state, the periodic location update procedure is not performed.

Specifically, referring to FIG. 4, when x=1, to be specific, the highest-level location area identity list to which the current location of the UE belongs is a TAI list at L1 in the N levels of location area identity lists, PTV1 is used, and if the fifth timer exceeds PTV1, the periodic location update procedure is performed; otherwise, the periodic location update procedure is not performed;
when X=2, to be specific, the highest-level location area identity list to which the current location of the UE belongs is a TAI list at L2 in the N levels of location area identity lists, PTV2 is used, and if the fifth timer exceeds PTV2, the periodic location update procedure is performed; otherwise, the periodic location update procedure is not performed;
..; or
when x=n, to be specific, the highest-level location area identity list to which the current location of the UE belongs is a TAI list at Ln in the N levels of location area identity lists, PTn is used, and if the fifth timer exceeds PTVn, the periodic location update procedure is performed; otherwise, the periodic location update procedure is not performed.

It can be learned from the foregoing descriptions that, in the location update procedure, when the UE moves between areas identified by different levels of TAI lists, the UE determines, based on a status of a timer corresponding to a target-level TAI list, whether to perform the periodic location update procedure.

In addition, when the UE is in the idle mode, and the UE moves to the outside of the areas to which the N levels of TAI lists belong, the UE immediately performs the aperiodic location update procedure.

Finally, location update management when it is not the first time for the UE to enter the idle mode from the connected mode is described.

If the UE re-enters the idle mode from the connected mode after receiving second location area management information, for example, the UE re-enters the idle mode after performing the periodic location update procedure, a location management procedure is as follows:
When the UE enters the idle mode after performing the periodic location update procedure in the area to which the ith-level location area identity list in the N levels of location area identity lists belongs, the UE first starts the (N-j) timers, where the durations of the (N-j) timers are respectively the periodic time values corresponding to the (j+1)th-level location area identity list to the Nth-level location area identity list in the N levels of location area identity lists, where 1<i≤N, j<i, and i and j are both integers. When any one of the (N-j) timers times out, the UE identifies the timer that times out as the timeout state. Next, if the sixth timer is identified as the timeout state, and the highest-level location area identity list to which the current location of the UE belongs is the xth-level location area identity list in the N levels of location area identity lists, the UE initiates the periodic location update. The sixth timer is a timer that is in the N timers and whose duration is the periodic time value PTV corresponding to the xth-level location area identity list, where 1≤x≤N, and x is an integer.

In addition, that the UE initiates a location update based on the second location area management information is specifically as follows: When the UE is switched from the connected mode to the idle mode, the UE determines, based on the second location area management information, that the highest-level location area identity list that is in the N levels of location area identity lists and to which the current location of the UE belongs is the xth-level location area identity list, where 1≤x≤N, and x is an integer; and starts the seventh timer, where the duration of the seventh timer is the periodic time value corresponding to the xth-level location area identity list; and if the seventh timer is in the timeout state, the UE initiates the periodic location update.

It can be learned from the foregoing descriptions that, in this embodiment of the present invention, the two timers are set for each level of location area identity list and are respectively used for the location update management and the paging management. The duration of the timer used for the paging management is set by the first control plane node based on the RTV, and the duration of the timer used for the location update management is set by the UE based on the PTV

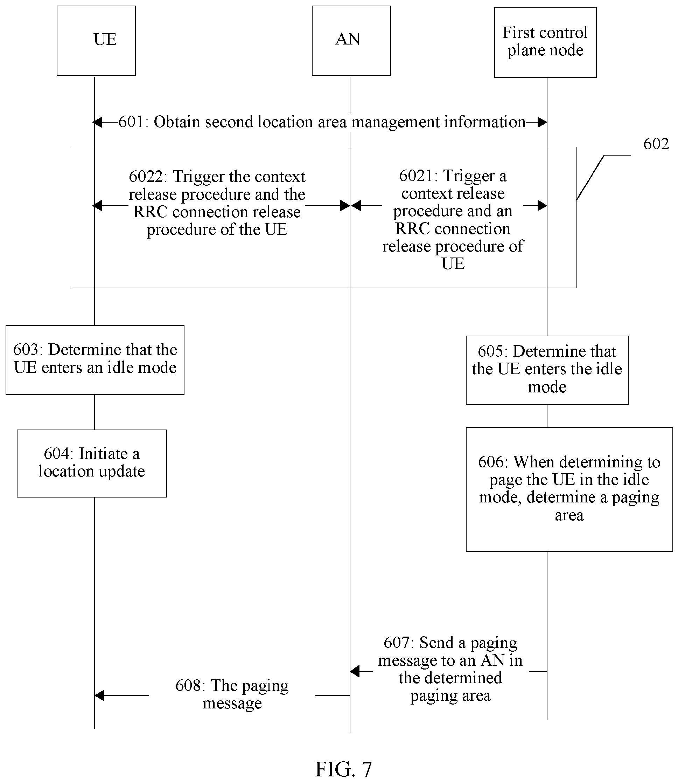

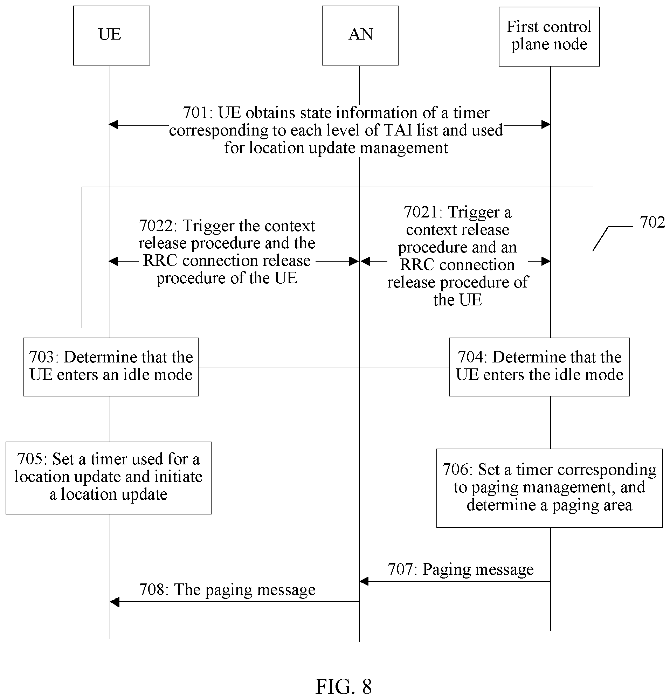

Next, the location management method is described in detail by using a specific embodiment. Specifically, refer to FIG. 7 and FIG. 8. FIG. 7 is a signaling diagram of Embodiment 7 of a location management method according to the present invention. The method includes the following steps.

601: UE obtains second location area management information.

602: When a condition is satisfied, trigger a context release procedure and an RRC connection release procedure of the UE.

This step includes the following two optional substeps:
6021: A first control plane node triggers the context release procedure and the RRC connection release procedure of the UE.
6022: An AN triggers the context release procedure and the RRC connection release procedure of the UE.
603: The UE determines that the UE enters an idle mode.
604: The UE initiates a location update.

Specifically, refer to the foregoing location update procedure, and details are not described herein again.

605: The first control plane node determines that the UE enters the idle mode.

606: When the first control plane node determines to page the UE in the idle mode, the first control plane node determines a paging area.

Specifically, refer to the foregoing paging procedure, and details are not described herein again.

607: The first control plane node sends a paging message to an AN in the determined paging area.

608: The AN sends the paging message to the UE.

In FIG. 7, 607 and 608 are optional steps, and are initiated only when the first control plane node determines to initiate the paging procedure to the UE.

FIG. 8 is a signaling diagram of Embodiment 8 of a location management method according to the present invention. The method includes the following steps.

701: UE obtains state information of a timer corresponding to each level of TAI list and used for location update management.

702: When a condition is satisfied, trigger a context release procedure and an RRC connection release procedure of the UE.

This step includes the following two optional substeps:
7021: A first control plane node triggers the context release procedure and the RRC connection release procedure of the UE.
7022: An AN triggers the context release procedure and the RRC connection release procedure of the UE.
703: The UE determines that the UE enters an idle mode.
704: The first control plane node determines that the UE enters the idle mode.
705: The UE sets a timer used for a location update and initiates a location update.

In this step, when the UE enters an idle mode from a connected mode, the UE sets, based on the state information of each level of timer obtained in 701, the timer corresponding to each level of TAI list and used for the location update management. For example, the UE starts timers corresponding to a (j+1)th-level TAI list to an Nth-level TAI list. When the UE is idle, if a sixth timer is in a timeout state, and a highest-level location area identity list to which a current location of the UE belongs is an xth-level location area identity list in the N levels of location area identity lists, the UE initiates a periodic location update, where the sixth timer is a timer that is in N timers and whose duration is a periodic time value PTV corresponding to the xth-level location area identity list, where 1≤x≤N, and x is an integer. When the UE moves in areas to which different levels of TAI lists belong, the UE does not perform an aperiodic location update procedure; and when the UE moves to the outside of an area to which a lowest-level TAI list belongs, the UE performs the aperiodic location update procedure.

706: The first control plane node sets a timer corresponding to paging management, and determines a paging area.

In this step, when the UE is switched from the connected mode to the idle mode, the first control plane node sets a timer corresponding to each level of TAI list and used for the paging management, for example, starts the timers corresponding to the (j+1)th-level TAI list to the Nth-level TAI list, to be specific, starts the (N-j) timers. If a third timer is in a timeout state and a fourth timer is in a non-timeout state, the first control plane node determines an area to which an (m+1)th-level location area identity list in the N levels of location area identity lists belongs, as the paging area; or if the (N-j) timers are all in a non-timeout state, the first control plane node determines an area to which the (j+1)th-level location area identity list in the N levels of location area identity lists belongs, as the paging area. The third timer is a timer that is in the (N-j) timers and whose duration is a reachable time value RTV corresponding to an mth-level location area identity list in the N levels of location area identity lists, and the fourth timer is a timer in the (N-j) timers and whose duration is a reachable time value corresponding to the (m+1)th-level location area identity list in the N levels of location area identity lists.

707: The first control plane node sends a paging message to the AN

After determining the paging area, the first control plane node sends the paging message to the corresponding AN.

708: The AN sends the paging message to the UE.

In FIG. 8, 707 and 708 are optional steps, and are initiated only when the first control plane node determines to initiate a paging procedure to the UE. In FIG. 8, in 701, the state information may be sent to the UE in a periodic TAU procedure, or the first control plane node determines to push the state information to the UE according to a local policy. A used procedure is not limited.

In FIG. 5, FIG. 5A to FIG. 5C, and FIG. 7 and FIG. 8, when a network architecture is a 5G network, the first control plane node is a CP or MM, or when a network architecture is an EPS network, the AN is an eNB, and the first control plane node is an MME

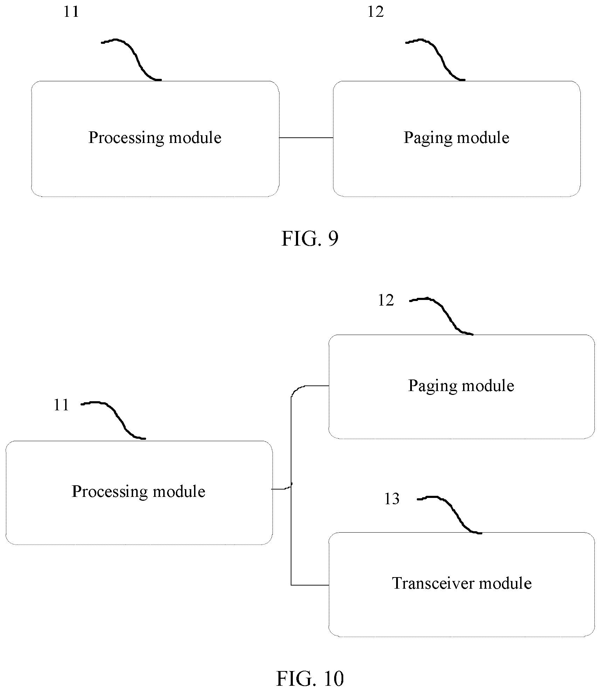

FIG. 9 is a schematic structural diagram of Embodiment 1 of a control plane node according to the present invention. A first control plane node provided in this embodiment can implement the steps of the method applied to the first control plane node and provided in any one of the embodiments in the present invention. In addition, technical terms in the foregoing method embodiments are all applicable to the apparatus embodiment. Specifically, the first control plane node provided in this embodiment includes:
a processing module 11, configured to: determine first location area management information of user equipment UE, where the first location area management information includes N levels of location area identity lists, and a periodic time value PTV and a reachable time value RTV that correspond to each level of location area identity list in the N levels of location area identity lists, and the N levels of location area identity lists include N levels of location area identity lists, where N is an integer greater than 1; and determine a paging area for the UE based on the first location area management information; and
a paging module 12, configured to page the UE in the paging area.

The first control plane node provided in this embodiment of the present invention determines the first location area management information of the UE, where the first location area management information includes the N levels of location area identity lists, and the periodic time value PTV and the reachable time value RTV that correspond to each level of location area identity list in the N levels of location area identity lists; and performs the paging management based on the first location area management information. In a paging management process, the first control plane node determines a paging area in areas to which the N levels of location area identity lists belong, and performs the paging management only in the paging area, instead of always performing the paging management in all the areas corresponding to the N levels of location area identity lists. The paging management is performed in a small range, so that signaling overheads for the paging management can be reduced, to balance the signaling overheads for the paging management and signaling overheads for location update management in a location management process.

Optionally, in an embodiment of the present invention, the N levels of location area identity lists include at least one Nth-level location area identity list and at least one (n+1)th-level location area identity list;
an area to which any one of the at least one (n+1)th-level location area identity list belongs is properly included in one or more of the at least one Nth-level location area identity list; and
a periodic time value PTVn corresponding to the Nth-level location area identity list is less than a periodic time value PTV(n+1) corresponding to the (n+1)th-level location area identity list, and a reachable time value RTVn corresponding to the Nth-level location area identity list is equal to (PTVn)+t, where t>0, 1≤n≤(N-1), and n is an integer.

Optionally, in an embodiment of the present invention, the processing module 11 is specifically configured to: when the UE is switched from a connected mode to an idle mode, start N timers, where durations of the N timers are respectively the reachable time values RTVs corresponding to the N levels of location area identity lists; and
if a first timer is in a timeout state and a second timer is in a non-timeout state, determine an area to which a (q+1)th-level location area identity list in the N levels of location area identity lists belongs, as the paging area; or if the N timers are all in a non-timeout state, determine, by the first control plane node, an area to which a first-level location area identity list in the N levels of location area identity lists belongs, as the paging area, where
the first timer is a timer that is in the N timers and whose duration is a reachable time value RTV corresponding to a qth-level location area identity list in the N levels of location area identity lists, and the second timer is a timer that is in the N timers and whose duration is a reachable time value corresponding to the (q+1)th-level location area identity list in the N levels of location area identity lists, where 1≤q≤(N-1), and q is an integer.

Optionally, in an embodiment of the present invention, the processing module 11 is specifically configured to: when the UE enters an idle mode after performing a periodic location update procedure in an area to which an ith-level location area identity list in the N levels of location area identity lists belongs, start (N-j) timers, where durations of the (N-j) timers are respectively reachable time values corresponding to a (j+1)th-level location area identity list to an Nth-level location area identity list in the N levels of location area identity lists, where 1<i≤N, j<i, and i and j are both integers; and
if a third timer is in a timeout state and a fourth timer is in a non-timeout state, determine an area to which an (m+1)th-level location area identity list in the N levels of location area identity lists belongs, as the paging area; or if the (N-j) timers are all in a non-timeout state, determine, by the first control plane node, an area to which the (j+1)th-level location area identity list in the N levels of location area identity lists belongs, as the paging area, where
the third timer is a timer that is in the N-j timers and whose duration is a reachable time value RTV corresponding to an mth-level location area identity list in the N levels of location area identity lists, and the fourth timer is a timer that is in the N-j timers and whose duration is a reachable time value corresponding to the (m+1)th-level location area identity list in the N levels of location area identity lists, where j+1≤m≤N, and m is an integer.

Optionally, in an embodiment of the present invention, the processing module 11 is further configured to: when the UE is switched from a connected mode to an idle mode, start N timers, where durations of the N timers are respectively the reachable time values RTVs corresponding to the N levels of location area identity lists; and
if each of the N timers is in a timeout state, identify the UE as an unreachable state.

Optionally, in an embodiment of the present invention, the processing module 11 is specifically configured to determine the first location area management information based on a current location of the UE.

Optionally, in an embodiment of the present invention, the processing module 11 is specifically configured to: determine the first location area management information based on the current location of the UE and information about a location area visited by the UE the previous time; or
the processing module 11 is specifically configured to receive third location area management information of the UE sent by a second control plane node, and determine the first location area management information based on the current location of the UE and the third location area management information. FIG. 10 is a schematic structural diagram of Embodiment 2 of a control plane node according to the present invention. Referring to FIG. 10, based on FIG. 9, the control plane node provided in this embodiment further includes:
a transceiver module 13, configured to send second location area management information to the UE, where the second location area management information includes the N levels of location area identity lists, and the PTV corresponding to each level of location area identity list in the N levels of location area identity lists.

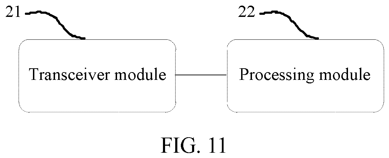

FIG. 11 is a schematic structural diagram of Embodiment 1 of UE according to the present invention. The UE provided in this embodiment can implement the steps of the method applied to the UE and provided in any one of the embodiments in the present invention. In addition, technical terms in the foregoing method embodiments are all applicable to the apparatus embodiment. Specifically, the UE provided in this embodiment includes:
   a transceiver module 21, configured to receive second location area management information sent by a first control plane node, where the second location area management information includes N levels of location area identity lists, and a periodic time value PTV corresponding to each level of location area identity list in the N levels of location area identity lists, and the N levels of location area identity lists include N levels of location area identity lists, where N is an integer greater than 1; and
   a processing module 22, configured to initiate a location update based on the second location area management information.

According to the UE provided in this embodiment of the present invention, the UE receives the second location area management information sent by the first control plane, where the second location area management information includes the N levels of location area identity lists, and the periodic time value PTV corresponding to each level of location area identity list in the N levels of location area identity lists, and the N levels of location area identity lists include the N levels of location area identity lists, where N is an integer greater than 1; and initiates the location update based on the second location area management information. In a process of implementing the location update, the periodic location update or the aperiodic location update is initiated based on the second location area management information.

Optionally, in an embodiment of the present invention, the N levels of location area identity lists include at least one Nth-level location area identity list and at least one (n+1)th-level location area identity list;
an area to which any one of the at least one (n+1)th-level location area identity list belongs is properly included in one or more of the at least one Nth-level location area identity list; and
a periodic time value PTVn corresponding to the Nth-level location area identity list is less than a periodic time value PTV(n+1) corresponding to the (n+1)th level location area identity list, where 1≤n≤(N-1), and n is an integer.

Optionally, in an embodiment of the present invention, the processing module 22 is specifically configured to: when the UE is switched from a connected mode to an idle mode, start N timers, where durations of the N timers are respectively the periodic time values PTVs corresponding to the N levels of location area identity lists; and
if a fifth timer is in a timeout state, and a highest-level location area identity list that is in the N levels of location area identity lists and to which a current location of the UE belongs is an xth-level location area identity list, initiate a periodic location update, where
the fifth timer is a timer whose duration is a periodic time value PTV corresponding to the xth-level location area identity list, where 1≤x≤N, and x is an integer.

Optionally, in an embodiment of the present invention, the processing module 22 is specifically configured to: when the UE enters an idle mode after performing a periodic location update procedure in an area to which an ith-level location area identity list in the N levels of location area identity lists belongs, start (N-j) timers, where durations of the (N-j) timers are respectively periodic time values corresponding to a (j+1)th-level location area identity list to an Nth-level location area identity list in the N levels of location area identity lists, where 1<i≤N, j<i, and i and j are both integers; and
if a sixth timer is in a timeout state, and a highest-level location area identity list that is in the N levels of location area identity lists and to which a current location of the UE belongs is an xth-level location area identity list, initiate a periodic location update, where
the sixth timer is a timer that is in the (N-j) timers and whose duration is a periodic time value PTV corresponding to the xth-level location area identity list, where (j+1)≤x≤N, and x is an integer.

Optionally, in an embodiment of the present invention, the processing module 22 is specifically configured to: when the UE is switched from a connected mode to an idle mode, determine, based on the second location area management information, that a highest-level location area identity list that is in the N levels of location area identity lists and to which a current location of the UE belongs is an xth-level location area identity list, where 1≤x≤N, and x is an integer; and start a seventh timer, where duration of the seventh timer is a periodic time value corresponding to the xth-level location area identity list; and
if the seventh timer is in a timeout state, initiate a periodic location update.

Optionally, in an embodiment of the present invention, the processing module 22 is specifically configured to: when a current location of the UE does not belong to an area corresponding to any one of the N levels of location area identity lists, or a current location of the UE does not belong to an area corresponding to a first-level location area identity list in the N levels of location area identity lists, initiate an aperiodic location update.

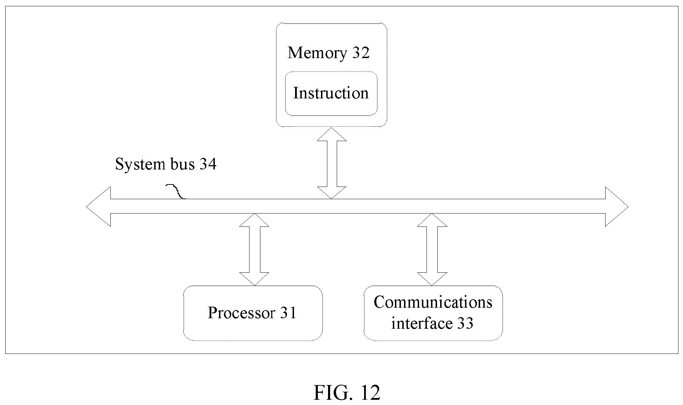

FIG. 12 is a schematic structural diagram of Embodiment 3 of a control plane node according to the present invention. The first control plane node provided in this embodiment includes a processor 31, a memory 32, a communications interface 33, and a system bus 34. The memory 32 and the communications interface 33 are connected to the processor 31 by using the system bus 34, to complete mutual communication. The memory 32 is configured to store a computer executable instruction. The communications interface 33 is configured to communicate with another device. The processor 31 is configured to run the computer executable instruction, to enable the first control plane node to perform the steps of the method applied to the first control plane node.

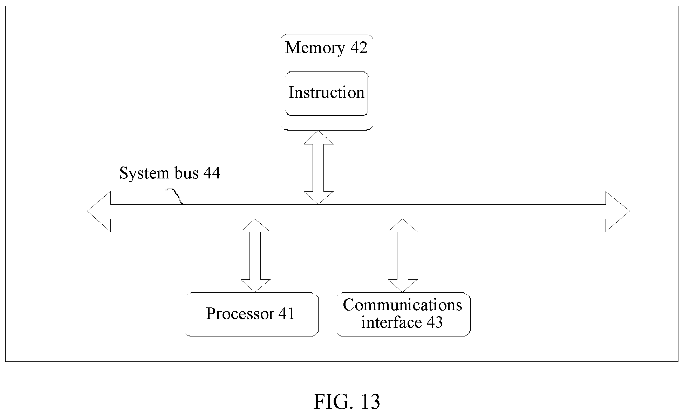

FIG. 13 is a schematic structural diagram of Embodiment 2 of UE according to the present invention. The UE provided in this embodiment includes a processor 41, a memory 42, a communications interface 43, and a system bus 44. The memory 42 and the communications interface 43 are connected to the processor 41 by using the system bus 44, to complete mutual communication. The memory 42 is configured to store a computer executable instruction. The communications interface 43 is configured to communicate with another device. The processor 41 is configured to run the computer executable instruction, to enable the UE to perform the steps of the method applied to the UE.

Persons of ordinary skill in the art may understand that all or some of the steps of the method embodiments may be implemented by a program instructing relevant hardware. The program may be stored in a computer readable storage medium. When the program is run, the steps of the method embodiments are performed. The foregoing storage medium includes any medium that can store program code, such as a ROM, a RAM, a magnetic disk, or an optical disc.

## Claims

1. A location management method, comprising:
receiving (501), by user equipment, UE, second location area management information from a first control plane node, wherein the second location area management information comprises N levels of location area identity lists, and a periodic time value, PTV, corresponding to each level of location area identity list in the N levels of location area identity lists, wherein N is an integer greater than 1; and
initiating (502), by the UE, a location update based on the second location area management information, wherein the N levels of location area identity lists comprise at least one nth-level location area identity list and at least one (n+1)th-level location area identity list;
an area to which any one of the at least one (n+1)th-level location area identity list belongs is properly comprised in one or more of the at least one nth-level location area identity list; and
a PTVn corresponding to the nth-level location area identity list is less than a PTV(n+1) corresponding to the (n+1)th level location area identity list, wherein 1≤n≤(N-1), and n is an integer, **characterized in that** the initiating, by the UE, a location update based on the second location area management information comprises:
when the UE is switched from a connected mode to an idle mode, starting, by the UE, N timers, wherein durations of the N timers are respectively the PTVs corresponding to the N levels of location area identity lists; and
when a fifth timer is in a timeout state, and a highest-level location area identity list that is in the N levels of location area identity lists and to which a current location of the UE belongs is an xth-level location area identity list, initiating, by the UE, a periodic location update, wherein
the fifth timer is a timer whose duration is a PTV corresponding to the xth-level location area identity list, wherein 1≤x≤N, and x is an integer or that the initiating, by the UE, a location update based on the second location area management information comprises:
when the UE enters an idle mode after performing a periodic location update procedure in an area to which an ith-level location area identity list in the N levels of location area identity lists belongs, starting, by the UE, (N-j) timers, wherein durations of the (N-j) timers are respectively PTVs corresponding to a (j+1)th-level location area identity list to an nth-level location area identity list in the N levels of location area identity lists, wherein 1<i≤N, j<i, and i and j are both integers; and
when a sixth timer is in a timeout state, and a highest-level location area identity list that is in the N levels of location area identity lists and to which a current location of the UE belongs is an xth-level location area identity list, initiating, by the UE, a periodic location update, wherein
the sixth timer is a timer that is in the (N-j) timers and whose duration is a PTV corresponding to the xth-level location area identity list, wherein j+1≤x≤N, and x is an integer or that the initiating, by the UE, a location update based on the second location area management information comprises:
when the UE is switched from a connected mode to an idle mode, determining, by the UE based on the second location area management information, that a highest-level location area identity list that is in the N levels of location area identity lists and to which a current location of the UE belongs is an xth-level location area identity list, wherein 1≤x≤N, and x is an integer; and starting a seventh timer, wherein duration of the seventh timer is a periodic time value corresponding to the xth-level location area identity list; and
when the seventh timer is in a timeout state, initiating, by the UE, the periodic location update.

2. A user equipment, UE, comprising:
a transceiver module (21), configured to receive second location area management information from a first control plane node, wherein the second location area management information comprises N levels of location area identity lists, and a periodic time value, PTV, corresponding to each level of location area identity list in the N levels of location area identity lists, wherein N is an integer greater than 1; and
a processing module (22), configured to initiate a location update based on the second location area management information, wherein
the N levels of location area identity lists comprise at least one nth-level location area identity list and at least one (n+1)th-level location area identity list;
an area to which any one of the at least one (n+1)th-level location area identity list belongs is properly included in one or more of the at least one nth-level location area identity list; and
a PTVn corresponding to the nth-level location area identity list is less than a PTV(n+1) corresponding to the (n+1)th level location area identity list, wherein 1≤n≤(N-1), and n is an integer, **characterized in that** the processing module (22) is further configured to:
when the UE is switched from a connected mode to an idle mode, start N timers, wherein durations of the N timers are respectively the PTVs corresponding to the N levels of location area identity lists; and
when a fifth timer is in a timeout state, and a highest-level location area identity list that is in the N levels of location area identity lists and to which a current location of the UE belongs is an xth-level location area identity list, initiate a periodic location update, wherein
the fifth timer is a timer whose duration is a PTV corresponding to the xth-level location area identity list, wherein 1≤x≤N, and x is an integer or that the processing module (22) is further configured to:
when the UE enters an idle mode after performing a periodic location update procedure in an area to which an ith-level location area identity list in the N levels of location area identity lists belongs, start (N-j) timers, wherein durations of the (N-j) timers are respectively periodic time values corresponding to a (j+1)th-level location area identity list to an nth-level location area identity list in the N levels of location area identity lists, wherein 1<i≤N, j<i, and i and j are both integers; and
when a sixth timer is in a timeout state, and a highest-level location area identity list that is in the N levels of location area identity lists and to which a current location of the UE belongs is an xth-level location area identity list, initiate a periodic location update, wherein
the sixth timer is a timer that is in the (N-j) timers and whose duration is a PTV corresponding to the xth-level location area identity list, wherein (j+1)≤x≤N, and x is an integer or that the processing module (22) is further configured to:
when the UE is switched from a connected mode to an idle mode, determine, based on the second location area management information, that a highest-level location area identity list that is in the N levels of location area identity lists and to which a current location of the UE belongs is an xth-level location area identity list, wherein 1≤x≤N, and x is an integer; and start a seventh timer, wherein duration of the seventh timer is a periodic time value corresponding to the xth-level location area identity list; and
when the seventh timer is in a timeout state, initiate a periodic location update.

3. A communication system, **characterized by** comprising: user equipment, UE, and a control plane node; wherein
the UE is configured to perform the method according to claim 1; and
the control plane node is configured to send the second location area management information to the UE.

4. The system according to claim 3, wherein the control plane node is further configured to:
determine first location area management information of the UE, wherein the first location area management information comprises N levels of location area identity lists, and a PTV and a reachable time value, RTV, that correspond to each level of location area identity list in the N levels of location area identity lists, and the N levels of location area identity lists comprise N levels of location area identity lists, wherein N is an integer greater than 1;
determine a paging area for the UE based on the first location area management information; and
page the UE in the paging area wherein the RTVn corresponding to the nth-level location area identity list is equal to (PTVn)+t, where t>0, 1≤n≤(N-1), and n is an integer.

5. A computer program comprising instructions which, when the program is executed by a the user equipment of claim 2 cause the user equipment to carry out the method of claim 1.

## Patentansprüche

1. Standortverwaltungsverfahren, umfassend:
Empfangen (501), durch ein Benutzergerät, UE, von zweiten Standortbereichs-Verwaltungsinformationen von einem ersten Steuerfeldknoten, wobei die zweiten Standortbereichs-Verwaltungsinformationen N Ebenen von Standortbereichs-Identitätslisten und einen periodischen Zeitwert, PTV, entsprechend jeder Ebene der Standortbereichs-Identitätsliste in den N Ebenen der Standortbereichs-Identitätslisten umfassen, wobei N eine ganze Zahl größer als 1 ist; und
Initiieren (502), durch das UE, einer Standortaktualisierung basierend auf den zweiten Standortbereichs-Verwaltungsinformationen, wobei die N Ebenen von Standortbereichs-Identitätslisten mindestens eine Standortbereichs-Identitätsliste der n-ten Ebene und mindestens eine Standortbereichs-Identitätsliste der (n+1)-ten Ebene umfassen;
wobei ein Bereich, zu dem eine der mindestens einen Standortbereichs-Identitätsliste der (n+1)-ten Ebene gehört, ordnungsgemäß in einer oder mehreren der mindestens einen Standortbereichs-Identitätsliste der n-ten Ebene umfasst ist; und
ein PTVn, der der Standortbereichs-Identitätsliste der n-ten Ebene entspricht, kleiner ist als ein PTV(n+1), der der Standortbereichs-Identitätsliste der (n+1)-ten Ebene entspricht, wobei 1≤n≤(N-1) und n eine ganze Zahl ist, **dadurch gekennzeichnet, dass** das Initiieren, durch das UE, einer Standortaktualisierung basierend auf den zweiten Standortbereichs-Verwaltungsinformationen umfasst:
wenn das UE von einem verbundenen Modus in einen ruhenden Modus umgeschaltet wird, Starten, durch das UE, von N Zeitgebern, wobei die Zeitspannen der N Zeitgeber jeweils die PTVs sind, die den N Ebenen der Standortbereichs-Identitätslisten entsprechen; und
wenn sich ein fünfter Zeitgeber in einem Timeout-Zustand befindet und eine Standortbereichs-Identitätsliste der höchsten Ebene, die sich in den N Ebenen von Standortbereichs-Identitätslisten befindet und zu der ein aktueller Standort des UE gehört, eine Standortbereichs-Identitätsliste der x-ten Ebene ist, Initiieren, durch das UE, einer periodischen Standortaktualisierung, wobei
der fünfte Zeitgeber ein Zeitgeber ist, dessen Zeitspanne ein PTV ist, der der Standortbereichs-Identitätsliste der x-ten Ebene entspricht, wobei 1≤x≤N und x eine ganze Zahl ist, oder dass das Initiieren, durch das UE, einer Standortaktualisierung basierend auf den zweiten Standortbereichs-Verwaltungsinformationen umfasst:
wenn das UE in einen ruhenden Modus eintritt, nachdem es einen periodischen Standortaktualisierungsvorgang in einem Bereich durchgeführt hat, zu dem eine Standortbereichs-Identitätsliste der i-ten Ebene in den N Ebenen der Standortbereichs-Identitätslisten gehört, Starten, durch das UE, von (N-j) Zeitgebern,
wobei die Zeitspannen der (N-j) Zeitgeber jeweils PTVs sind, die einer Standortbereichs-Identitätsliste der (j+1)-ten Ebene zu einer Standortbereichs-Identitätsliste der n-ten Ebene in den N Ebenen der Standortbereichs-Identitätslisten entsprechen, wobei 1<i≤N, j<i, und i und j beide ganze Zahlen sind; und
wenn sich ein sechster Zeitgeber in einem Timeout-Zustand befindet und eine Standortbereichs-Identitätsliste der höchsten Ebene, die sich in den N Ebenen von Standortbereichs-Identitätslisten befindet und zu der ein aktueller Standort des UE gehört, eine Standortbereichs-Identitätsliste der x-ten Ebene ist, Initiieren, durch das UE, einer periodischen Standortaktualisierung, wobei
der sechste Zeitgeber ein Zeitgeber ist, der sich in den (N-j)-Zeitgebern befindet und dessen Zeitspanne ein PTV ist, der der Standortbereichs-Identitätsliste der x-ten Ebene entspricht, wobei j+1≤x≤N und x eine ganze Zahl ist, oder dass das Initiieren, durch das UE, einer Standortaktualisierung basierend auf den zweiten Standortbereichs-Verwaltungsinformationen umfasst:
wenn das UE von einem verbundenen Modus in einen ruhenden Modus umgeschaltet wird, Bestimmen durch das UE basierend auf den zweiten Standortbereichs-Verwaltungsinformationen, dass eine Standortbereichs-Identitätsliste der höchsten Ebene, die sich in den N Ebenen von Standortbereichs-Identitätslisten befindet und zu der ein aktueller Standort des UE gehört, eine Standortbereichs-Identitätsliste der x-ten Ebene ist, wobei 1≤x≤N und x eine ganze Zahl ist; und Starten eines siebten Zeitgebers, wobei die Zeitspanne des siebten Zeitgebers ein periodischer Zeitwert ist, der der Standortbereichs-Identitätsliste der x-ten Ebene entspricht; und
wenn sich der siebte Zeitgeber in einem Timeout-Zustand befindet, Initiieren, durch das UE, der periodischen Standortaktualisierung.

2. Benutzergerät, UE, umfassend:
ein Transceiver-Modul (21), das dazu konfiguriert ist, zweite Standortbereichs-Verwaltungsinformationen von einem ersten Steuerfeldknoten zu empfangen, wobei die zweiten Standortbereichs-Verwaltungsinformationen N Ebenen von Standortbereichs-Identitätslisten und einen periodischen Zeitwert, PTV, umfassen, der jeder Ebene der Standortbereichs-Identitätsliste in den N Ebenen der Standortbereichs-Identitätslisten entspricht, wobei N eine ganze Zahl größer als 1 ist; und
ein Verarbeitungsmodul (22), das dazu konfiguriert ist, eine Standortaktualisierung basierend auf den zweiten Standortbereichs-Verwaltungsinformationen zu initiieren, wobei
die N Ebenen von Standortbereichs-Identitätslisten mindestens eine Standortbereichs-Identitätsliste der n-ten Ebene und mindestens eine Standortbereichs-Identitätsliste der (n+1)-ten Ebene umfassen;
einen Bereich, zu dem eine der mindestens einen Standortbereichs-Identitätsliste der (n+1)-ten Ebene gehört, ordnungsgemäß in einer oder mehreren der mindestens einen Standortbereichs-Identitätsliste der n-ten Ebene beinhaltet ist; und
ein PTVn, der der Standortbereichs-Identitätsliste der n-ten Ebene entspricht, kleiner ist als ein PTV(n+1), der der Standortbereichs-Identitätsliste der (n+1)-ten Ebene entspricht, wobei 1≤n≤(N-1) und n eine ganze Zahl ist, **dadurch gekennzeichnet, dass** das Verarbeitungsmodul (22) ferner dazu konfiguriert ist:
wenn das UE von einem verbundenen Modus in einen ruhenden Modus umgeschaltet wird, N Zeitgeber zu starten, wobei die Zeitspannen der N Zeitgeber jeweils die PTVs sind, die den N Ebenen der Standortbereichs-Identitätslisten entsprechen; und
wenn sich ein fünfter Zeitgeber in einem Timeout-Zustand befindet und eine Standortbereichs-Identitätsliste der höchsten Ebene, die sich in den N Ebenen von Standortbereichs-Identitätslisten befindet und zu der ein aktueller Standort des UE gehört, eine Standortbereichs-Identitätsliste der x-ten Ebene ist, eine periodische Standortaktualisierung zu initiieren, wobei
der fünfte Zeitgeber ein Zeitgeber ist, dessen Zeitspanne ein PTV ist, der der Standortbereichs-Identitätsliste der x-ten Ebene entspricht, wobei 1≤x≤N und x eine ganze Zahl ist, oder dass das Verarbeitungsmodul (22) ferner dazu konfiguriert ist:
wenn das UE in einen ruhenden Modus eintritt, nachdem es einen periodischen Standortaktualisierungsvorgang in einem Bereich durchgeführt hat, zu dem eine Standortbereichs-Identitätsliste der i-ten Ebene in den N Ebenen der Standortbereichs-Identitätslisten gehört, (N-j) Zeitspannen zu starten, wobei die Zeitspannen der (N-j) Zeitspannen jeweils periodische Zeitwerte sind, die einer Standortbereichs-Identitätsliste der (j+1)-ten Ebene zu einer Standortbereichs-Identitätsliste der n-ten Ebene in den N Ebenen der Standortbereichs-Identitätslisten entsprechen, wobei 1<i≤N, j<i und i und j beide ganze Zahlen sind; und
wenn sich ein sechster Zeitgeber in einem Timeout-Zustand befindet und eine Standortbereichs-Identitätsliste der höchsten Ebene, die sich in den N Ebenen von Standortbereichs-Identitätslisten befindet und zu der ein aktueller Standort des UE gehört, eine Standortbereichs-Identitätsliste der x-ten Ebene ist, eine periodische Standortaktualisierung zu initiieren, wobei
der sechste Zeitgeber ein Zeitgeber ist, der sich in den (N-j) Zeitgebern befindet und dessen Zeitspanne ein PTV ist, der der Standortbereichs-Identitätsliste der x-ten Ebene entspricht, wobei (j+1)≤x≤N und x eine ganze Zahl ist, oder dass das Verarbeitungsmodul (22) ferner dazu konfiguriert ist:
wenn das UE von einem verbundenen Modus in einen ruhenden Modus umgeschaltet wird, basierend auf den zweiten Standortbereichs-Verwaltungsinformationen zu bestimmen, dass eine Standortbereichs-Identitätsliste der höchsten Ebene, die sich in den N Ebenen von Standortbereichs-Identitätslisten befindet und zu der ein aktueller Standort des UE gehört, eine Standortbereichs-Identitätsliste der x-ten Ebene ist, wobei 1≤x≤N und x eine ganze Zahl ist; und einen siebten Zeitgeber zu starten, wobei die Zeitspanne des siebten Zeitgebers ein periodischer Zeitwert ist, der der Standortbereichs-Identitätsliste der x-ten Ebene entspricht; und
wenn sich der siebte Timer in einem Timeout-Zustand befindet, eine periodische Standortaktualisierung zu initiieren.

3. Kommunikationssystem, **gekennzeichnet dadurch, dass** es umfasst: ein Benutzergerät, UE, und einen Steuerfeldknoten; wobei
das UE dazu konfiguriert ist, das Verfahren nach Anspruch 1 durchzuführen; und der Steuerfeldknoten dazu konfiguriert ist, die zweiten Standortbereichs-Verwaltungsinformationen an das UE zu senden.

4. System nach Anspruch 3, wobei der Steuerfeldknoten ferner dazu konfiguriert ist:
erste Standortbereichs-Verwaltungsinformationen des UE zu bestimmen, wobei die ersten Standortbereichs-Verwaltungsinformationen N Ebenen von Standortbereichs-Identitätslisten und einen PTV und einen erreichbaren Zeitwert, RTV, umfassen, die jeder Ebene von Standortbereichs-Identitätslisten in den N Ebenen von Standortbereichs-Identitätslisten entsprechen, und die N Ebenen von Standortbereichs-Identitätslisten N Ebenen von Standortbereichs-Identitätslisten umfassen, wobei N eine ganze Zahl größer als 1 ist;
einen Paging-Bereich für das UE basierend auf den ersten Standortbereichs-Verwaltungsinformationen zu bestimmen; und
das UE im Paging-Bereich auszurufen, wobei der RTVn entsprechend der Standortbereichs-Identitätsliste der n-ten Ebene gleich (PTVn)+t ist, wobei t>0, 1≤n≤(N-1) und n eine ganze Zahl ist.

5. Computerprogramm, umfassend Anweisungen, die, wenn das Programm durch ein Benutzergerät nach Anspruch 2 ausgeführt wird, das Benutzergerät veranlassen, das Verfahren nach Anspruch 1 durchzuführen.

## Revendications

1. Procédé de gestion de localisation, comportant :
la réception (501), par un équipement d'utilisateur, UE, de deuxièmes informations de gestion de zone de localisation en provenance d'un premier nœud de plan de commande, les deuxièmes informations de gestion de zone de localisation comportant N niveaux de listes d'identités de zones de localisation, et une valeur de temps périodique, PTV, correspondant à chaque niveau de liste d'identités de zones de localisation parmi les N niveaux de listes d'identités de zones de localisation, N étant un entier supérieur à 1 ; et
le lancement (502), par l'UE, d'une mise à jour de localisation d'après les deuxièmes informations de gestion de zone de localisation, les N niveaux de listes d'identités de zones de localisation comportant au moins une liste d'identités de zones de localisation de nième niveau et au moins une liste d'identités de zones de localisation de (n+1)ième niveau ;
une zone à laquelle appartient la liste ou l'une quelconque des listes d'identités de zones de localisation de (n+1)ième niveau étant comprise de façon appropriée dans une ou plusieurs listes parmi la ou les listes d'identités de zones de localisation de nième niveau ; et
une PTVn correspondant à la liste d'identités de zones de localisation de nième niveau étant inférieure à une PTV(n+1) correspondant à la liste d'identités de zones de localisation de (n+1)ième niveau, avec 1≤n≤(N-1), et n étant un entier, **caractérisé en ce que** le lancement, par l'UE, d'une mise à jour de localisation d'après les deuxièmes informations de gestion de zone de localisation comporte :
lorsque l'UE est commuté d'un mode connecté à un mode inactif, le démarrage, par l'UE, de N temporisateurs, les durées des N temporisateurs étant respectivement les PTV correspondant aux N niveaux de listes d'identités de zones de localisation ; et lorsqu'un cinquième temporisateur est dans un état expiré, et lorsqu'une liste d'identités de zones de localisation de plus haut niveau qui figure parmi les N niveaux de listes d'identités de zones de localisation et à laquelle appartient une localisation actuelle de l'UE est une liste d'identités de zones de localisation de x-ième niveau, le lancement, par l'UE, d'une mise à jour périodique de localisation, le cinquième temporisateur étant un temporisateur dont la durée est une PTV correspondant à la liste d'identités de zones de localisation de x-ième niveau, avec 1≤x≤N, et x étant un entier ou **en ce que** le lancement, par l'UE, d'une mise à jour de localisation d'après les deuxièmes informations de gestion de zone de localisation comporte :
lorsque l'UE entre dans un mode inactif après avoir effectué une procédure de mise à jour périodique de localisation dans une zone à laquelle appartient une liste d'identités de zones de localisation de i-ième niveau parmi les N niveaux de listes d'identités de zones de localisation, le démarrage, par l'UE, de (N-j) temporisateurs,
les durées des (N-j) temporisateurs étant respectivement des PTV correspondant à une liste d'identités de zones de localisation de (j+1)ième niveau jusqu'à une liste d'identités de zones de localisation de nième niveau parmi les N niveaux de listes d'identités de zones de localisation, avec 1<i≤N, j<i, et i et j étant tous deux des entiers ; et
lorsqu'un sixième temporisateur est dans un état expiré, et lorsqu'une liste d'identités de zones de localisation de plus haut niveau qui figure parmi les N niveaux de listes d'identités de zones de localisation et à laquelle appartient une localisation actuelle de l'UE est une liste d'identités de zones de localisation de x-ième niveau, le lancement, par l'UE, d'une mise à jour périodique de localisation,
le sixième temporisateur étant un temporisateur qui figure parmi les (N-j) temporisateurs et dont la durée est une PTV correspondant à la liste d'identités de zones de localisation de x-ième niveau, avec j+1≤x≤N, et x étant un entier ou **en ce que** le lancement, par l'UE, d'une mise à jour de localisation d'après les deuxièmes informations de gestion de zone de localisation comporte :
lorsque l'UE est commuté d'un mode connecté à un mode inactif, la détermination, par l'UE d'après les deuxièmes informations de gestion de zone de localisation, du fait qu'une liste d'identités de zones de localisation de plus haut niveau qui figure parmi les N niveaux de listes d'identités de zones de localisation et à laquelle appartient une localisation actuelle de l'UE est une liste d'identités de zones de localisation de x-ième niveau, avec 1≤x≤N, et x étant un entier ; et le démarrage d'un septième temporisateur, la durée du septième temporisateur étant une valeur de temps périodique correspondant à la liste d'identités de zones de localisation de x-ième niveau ; et
lorsque le septième temporisateur est dans un état expiré, le lancement, par l'UE, de la mise à jour périodique de localisation.

2. Équipement d'utilisateur, UE, comportant :
un module (21) d'émetteur-récepteur, configuré pour recevoir des deuxièmes informations de gestion de zone de localisation en provenance d'un premier nœud de plan de commande, les deuxièmes informations de gestion de zone de localisation comportant N niveaux de listes d'identités de zones de localisation, et une valeur de temps périodique, PTV, correspondant à chaque niveau de liste d'identités de zones de localisation parmi les N niveaux de listes d'identités de zones de localisation, N étant un entier supérieur à 1 ; et
un module (22) de traitement, configuré pour lancer une mise à jour de localisation d'après les deuxièmes informations de gestion de zone de localisation,
les N niveaux de listes d'identités de zones de localisation comportant au moins une liste d'identités de zones de localisation de nième niveau et au moins une liste d'identités de zones de localisation de (n+1)ième niveau ;
une zone à laquelle appartient la liste ou l'une quelconque des listes d'identités de zones de localisation de (n+1)ième niveau étant comprise de façon appropriée dans une ou plusieurs listes parmi la ou les listes d'identités de zones de localisation de nième niveau ; et
une PTVn correspondant à la liste d'identités de zones de localisation de nième niveau étant inférieure à une PTV(n+1) correspondant à la liste d'identités de zones de localisation de (n+1)ième niveau, avec 1≤n<(N-1), et n étant un entier, **caractérisé en ce que** le module (22) de traitement est en outre configuré pour :
lorsque l'UE est commuté d'un mode connecté à un mode inactif, démarrer N temporisateurs, les durées des N temporisateurs étant respectivement les PTV correspondant aux N niveaux de listes d'identités de zones de localisation ; et
lorsqu'un cinquième temporisateur est dans un état expiré, et lorsqu'une liste d'identités de zones de localisation de plus haut niveau qui figure parmi les N niveaux de listes d'identités de zones de localisation et à laquelle appartient une localisation actuelle de l'UE est une liste d'identités de zones de localisation de x-ième niveau, lancer une mise à jour périodique de localisation,
le cinquième temporisateur étant un temporisateur dont la durée est une PTV correspondant à la liste d'identités de zones de localisation de x-ième niveau, avec 1≤x≤N, et x étant un entier ou **en ce que** le module (22) de traitement est en outre configuré pour :
lorsque l'UE entre dans un mode inactif après avoir effectué une procédure de mise à jour périodique de localisation dans une zone à laquelle appartient une liste d'identités de zones de localisation de i-ième niveau parmi les N niveaux de listes d'identités de zones de localisation, démarrer (N-j) temporisateurs, les durées des (N-j) temporisateurs étant respectivement des valeurs de temps périodiques correspondant à une liste d'identités de zones de localisation de (j+1)ième niveau jusqu'à une liste d'identités de zones de localisation de nième niveau parmi les N niveaux de listes d'identités de zones de localisation, avec 1<i≤N, j<i, et i et j étant tous deux des entiers ; et
lorsqu'un sixième temporisateur est dans un état expiré, et lorsqu'une liste d'identités de zones de localisation de plus haut niveau qui figure parmi les N niveaux de listes d'identités de zones de localisation et à laquelle appartient une localisation actuelle de l'UE est une liste d'identités de zones de localisation de x-ième niveau, lancer une mise à jour périodique de localisation,
le sixième temporisateur étant un temporisateur qui figure parmi les (N-j) temporisateurs et dont la durée est une PTV correspondant à la liste d'identités de zones de localisation de x-ième niveau, avec (j+1)≤x≤N, et x étant un entier ou **en ce que** le module (22) de traitement est en outre configuré pour :
lorsque l'UE est commuté d'un mode connecté à un mode inactif, déterminer, d'après les deuxièmes informations de gestion de zone de localisation, qu'une liste d'identités de zones de localisation de plus haut niveau qui figure parmi les N niveaux de listes d'identités de zones de localisation et à laquelle appartient une localisation actuelle de l'UE est une liste d'identités de zones de localisation de x-ième niveau, avec 1≤x≤N, et x étant un entier ; et démarrer un septième temporisateur, la durée du septième temporisateur étant une valeur de temps périodique correspondant à la liste d'identités de zones de localisation de x-ième niveau ; et
lorsque le septième temporisateur est dans un état expiré, lancer une mise à jour périodique de localisation.

3. Système de communication, **caractérisé en ce qu'**il comporte : un équipement d'utilisateur, UE, et un nœud de plan de commande ;
l'UE étant configuré pour réaliser le procédé selon la revendication 1 ; et
le nœud de plan de commande étant configuré pour envoyer les deuxièmes informations de gestion de zone de localisation à l'UE.

4. Système selon la revendication 3, le nœud de plan de commande étant en outre configuré pour :
déterminer des premières informations de gestion de zone de localisation de l'UE, les premières informations de gestion de zone de localisation comportant N niveaux de listes d'identités de zones de localisation, et une PTV et une valeur de temps atteignable, RTV, qui correspondent à chaque niveau de liste d'identités de zones de localisation parmi les N niveaux de listes d'identités de zones de localisation, et les N niveaux de listes d'identités de zones de localisation comportant N niveaux de listes d'identités de zones de localisation, N étant un entier supérieur à 1 ;
déterminer une zone de radiorecherche pour l'UE d'après les premières informations de gestion de zone de localisation ; et
procéder à une radiorecherche de l'UE dans la zone de radiorecherche où la RTVn correspondant à la liste d'identités de zones de localisation de nième niveau est égale à (PTVn)+t, avec t>0, 1≤n<(N-1), et n étant un entier.

5. Programme informatique comportant des instructions qui, lorsque le programme est exécuté par l'équipement d'utilisateur selon la revendication 2, amènent l'équipement d'utilisateur à réaliser le procédé selon la revendication 1.
